## Europäisches Patentamt

## European Patent Office

## Office européen des brevets

(11) Veröffentlichungsnummer: **0 361 299 B1**

# EUROPÄISCHE PATENTSCHRIFT

(45) Veröffentlichungstag der Patentschrift: **05.01.94**

(51) Int. Cl.5: **H04B 7/26**

(21) Anmeldenummer: **89117388.2**

(22) Anmeldetag: **20.09.89**

(54) **Digitales Funkübertragungssystem für ein aus Zellen aufgebautes Netz unter Verwendung der Bandspreiztechnik.**

(30) Priorität: **29.09.88 CH 3628/88**

(43) Veröffentlichungstag der Anmeldung:
**04.04.90 Patentblatt 90/14**

(45) Bekanntmachung des Hinweises auf die Patenterteilung:
**05.01.94 Patentblatt 94/01**

(84) Benannte Vertragsstaaten:
**AT BE DE ES FR GB IT NL SE**

(56) Entgegenhaltungen:
**DE-A- 2 603 524**

**INT. CONF. ON COMMUNICATIONS, Seattle, 7.-10. Juni 1987, Band 1, Seiten 86-90, IEEE, New York, US; M. KAVEHRAD et al.: "An experiment with direct-sequence spread spectrum using differential phase shift keying modulation for indoor, wireless communications"**

(73) Patentinhaber: **ASCOM ZELCOM AG**
**Eichtalstrasse**
**CH-8634 Hombrechtikon(CH)**

(72) Erfinder: **Kaufmann, Hans**
**Chapfstrasse 17**
**CH-8625 Gossau(CH)**
Erfinder: **Küng, Roland**
**Bühlhofstrasse 66A**
**CH-8633 Wolfhausen(CH)**
Erfinder: **Grob, Urs**
**Tübacherstrasse 13**
**CH-9403 Goldach(CH)**
Erfinder: **Welti, Arnold**
**Seidenstrasse 35**
**CH-5200 Brugg(CH)**

(74) Vertreter: **Schwerdtel, Eberhard, Dr.**
**Ascom Tech AG**
**Gewerblicher Rechtsschutz**
**Freiburgstrasse 370**
**CH-3018 Bern (CH)**

GLOBAL TELECOMMUNICATIONS CONFE-
RENCE, Houston, 1.-4. Dezember 1986, Band
2, Seite 1127-1131, IEEE, New York, US; H.
OCHSNER: "An antimulipath spread-spectrum receiver and its application to portable
radio telephone"

P.W. BAIER et al.: "Störunterdrückende Funkübertragungstechnik", 1984, Seiten 90-107, R.
Oldenbourg Verlag, München, DE

PROCEEDINGS OF EUSIPCO-88, Grenoble,
5.-8. September 1988, Seiten 1345-1348; T.
HASAN et al.: "A portable telephone using
spread-spectrum"

## Beschreibung

Die Bandspreiztechnik (Spread Spectrum) beruht auf der Austauschbarkeit von Signal/Störleistungsverhältnis und Bandbreite. Spread Spectrum Systeme (SSS) verwenden zur Bandspreizung eine Hilfsfunktion, deren Verlauf im Empfänger bekannt ist. Daraus resultiert die hervorragende Eigenschaft, dass diese Systeme auch bei sehr schwierigen Signal/Störleistungsverhältnissen arbeiten können. Als Hilfsfunktionen eignen sich Signale, die selber eine grosse Bandbreite aufweisen und diese bei der Verknüpfung mit dem Informationssignal auf das Sendesignal übertragen. Dank des grossen Zeit-Bandbreite-Produkts kann eine günstige Autokorrelationsfunktion (AKF) mit einer scharfen Spitze im Ursprung und niedrigen Nebenwerten erzeugt werden, wobei mit Hilfe dieser Eigenschaft die notwendige Synchronisation der die Hilfsfunktionen bildenden Codesequenzen im Empfänger hergestellt werden kann.

Eine weitere Eigenschaft von SSS besteht darin, dass sich in einem Kanal einer gegebenen Bandbreite gleichzeitig mehrere Spread-Spectrum-Signale übermitteln lassen, und zwar unter der Bedingung, dass sich die Hilfsfunktionen verschiedener Benützer in ihren Kreuzkorrelationseigenschaften deutlich unterscheiden. Somit lassen sich Netze mit Mehrfachzugriff (Code Division Multiple Access = CDMA) verwirklichen. Die Art des Spektrums von SSS erlaubt in gewissem Mass den Betrieb auf Frequenzbändern, die bereits durch Schmalband-Dienste benutzt werden, ohne dass sich diese beiden Systeme gegenseitig wesentlich stören. Durch die Verwendung von pseudostatistischen Codesequenzen mit kurzer sogenannter Chip-Dauer Tc (= kleinste Rechteck-Impulsdauer der Hilfsfunktion) ist es zudem möglich, bei Funkverbindungen mit Ausbreitungen über verschiedene natürliche Pfade (sogenannte Mehrweg-Verbindungen), diese Pfade einzeln aufzulösen und als Diversity-Komponenten nutzbringend auszuwerten.

Die Erfindung betrifft ein digitales Funkübertragungssystem für ein aus Zellen aufgebautes Netz unter Verwendung der Bandspreiztechnik, bei welchem sendeseitig durch Multiplikation des nachrichtentragenden Signals mit einer Hilfsfunktion eine Bandspreizung und empfangsseitig unter Benützung dieser Hilfsfunktion eine Rückspreizung erfolgt, mit mehreren innerhalb einer Zelle vorhandenen Benützerstationen mit je einem Sender, einem Empfänger für Mehrwegempfang und einer Steuereinheit, und mit einer Basisstation mit einer Anzahl von Sende-Empfängern und einer Basissteuereinheit.

Derartige Systeme, bei denen die Bandspreizung durch Multiplikation des nachrichtentragenden Signals und der Hilfsfunktion erfolgt, werden als Direct Sequence-Spread-Spectrum Systeme (DS-SSS) bezeichnet (siehe beispielsweise R.C. Dixon: "Spread Spectrum Systems", John Wiley Interscience, 1984). Aus der Literatur (A. Baier: "A Low-Cost Digital Matched Filter for Arbitrary Constant-Envelope Spread-Spectrum Waveforms" IEEE Trans. Comm., Vol. COM-32, April 1984, p. 354; M. Kowatsch: "Synchronisation in a Spread-Spectrum Communication Modem Based on SAW Convolvers", IEEE Milcom '84, Los Angeles, Oct. 1984, p. 9.5. 1; U.S. Patent 4 672 658) bekannte Verfahren zur Realisation von DS-SSS-Empfängern können grob in zwei Kategorie unterteilt werden, den Matched Filter-Typ und den Korrelations-Typ. Beide Verfahren zielen auf eine möglichst genaue Synchronisation der Hilfsequenz im Empfänger bezüglich der Sendehilfesequenz ab. Der entscheidende Parameter für den 1. Typ ist das Zeit-Bandbreite-Produkt des Matched Filters. Heute können nur durch CCD-(Charged Coupled Devices) und SAW-(Surface Acoustic Wave) Technologien genügend hohe Werte erreicht werden. Der Vorteil dieser Technik ist die schnelle Synchronisationszeit, der grosse Nachteil ist der durch die Technologie begrenzte Prozessgewinn, das heisst die begrenzte Korrelationsdauer, und somit die Periodendauer der Hilfsfunktion. Die SAW-Technologie hat den Nachteil eines kleinen Dynamikbereichs infolge ihrer hohen Eigenverluste, CCD sind in der Taktfrequenz beschränkt und digitale Matched Filter sind infolge der Amplitudenquantisierung und der erforderlichen Chipfläche nicht optimal.

Demgegenüber weist der Korrelationstyp den Nachteil einer längeren Synchronisationszeit auf, was in den meisten Anwendungen aber nicht störend ist. Bei der Korrelation wird der Empfänger-Code entsprechend der zeitlichen Verzögerung zum Sender so lange kontinuierlich oder schrittweise verschoben und jeweils mit dem Empfangssignal korreliert, bis das Maximum der Korrelationsfunktion gefunden ist, d.h. die restliche Verschiebung kleiner als die Chipdauer ist. Dieser Suchvorgang ist von der Länge M der Hilfsfunktion abhängig, aber für die Periodendauer der Hilfsfunktion bestehen keine Restriktionen.

Ein grobes Funktionsprinzip ist aus der schon genannten Literaturstelle von R.C. Dixon bekannt. Es ist ausserdem bekannt, dass die Empfangsstruktur derart erweitert werden kann, dass gleichzeitig einige Korrelationen mit verschobenen Hilfsfunktionen stattfinden. Dadurch kann einerseits eine etwas schnellere Akquisition (Finden des synchronen Zeitpunkts) erreicht werden, und im Falle des Vorhandenseins mehrerer Ausbreitungspfade können diese unabhängig voneinander je synchron korreliert und somit kann die natürliche Diversity der unterschiedlichen Pfade ausgenutzt werden. H.

Ochsner beschreibt in "An Antimultipath Spread-Spectrum Receiver and its Application to Portable Radio Telephone", IEEE Globecom '86, Houston, Dec. 1986, pages 1127-1131, eine solche Architektur, ohne jedoch eine praktische, realisierbare Ausführung anzugeben. Eine Strategie zur anfänglichen Synchronisation und zu deren Aufrechterhaltung wird von Ochsner ebenfalls nicht offenbart.

Durch die Erfindung soll nun ein praktisch realisierbares DS-SS-System von der Grundstruktur eines Empfängers vom Korrelationstyp für mehrere Pfade angegeben werden, welches insbesondere für digitale Datenübertragung in Gebäuden und dergleichen lokalen Bereichen eingesetzt werden kann, um ein Netz mit drahtlosen Verbindungen (sogenanntes cordless LAN) aufzubauen.

Diese Aufgabe wird erfindungsgemäss dadurch gelöst, dass

a) jeder Zelle genau ein Set aus mehreren Sequenzsets für die als Hilfsfunktion verwendeten Spreizsequenzen zugeordnet und die Inverse der Spreizsequenz als Rückspreizsequenz verwendet ist;

b) Sequenzen aus verschiedenen Sets paarweise die Eigenschaft haben, dass die Absolutwerte der normierten periodischen Kreuzkorrelationsfunktionen für alle Werte viel kleiner sind als eins;

c) bei Sequenzen innerhalb eines Sets paarweise die Kreuzkorrelationsfunktion um den Nullpunkt optimal klein ist;

d) in der Basisstation für alle gleichzeitigen Verbindungen eine datensynchrone Aufbereitung der Sendesignale erfolgt; und

e) der Datentakt des Empfangssignals als Datentakt des Sendesignals der jeweiligen Benützerstation verwendet ist.

Durch die erfindungsgemässen Systemparameter und Eigenschaften der Codesequenzen ergeben sich folgende Vorteile:

- Nichtsynchrone DS-Störsignale (DS = Direct Sequence) werden genügend unterdrückt.
- Störsignale von DS-Verbindungen innerhalb derselben Zelle, die datensynchron bei einem Empfänger eintreffen, werden fast vollständig unterdrückt.
- In dem Summensignal, das die Benützerstationen empfangen, sind die Signalanteile der verschiedenen Verbindungen einer Zelle datensynchron.
- Der Offset im Datentakt zweier DS-Signale derselben Zelle hängt bei der Zentrale nur von der Laufzeitdifferenz der Signale ab.

Die Datentaktregeneration wird mittels spezieller Akquisitions- und Tracking-Algorithmen zuverlässig durchgeführt. Die gewählten Empfängerblöcke lassen durch gezielten Einsatz von digitaler Signalverarbeitung einen grossen Spielraum für die Wahl der Systemparameter zu. Letzteres hat zur Folge, dass Anwendungen der SS-Technik für digitale Sprachübertragung oder für die Datenübertragung mit praktisch beliebiger Datenrate realisiert werden können. Gegenüber konventionellen Funkübertragungssystemen wird die Mehrwegausbreitung in Gebäuden oder im nicht ebenen Gelände optimal genutzt, und es ist ein gleichzeitiger Betrieb mit bestehenden Funksystemen im selben Frequenzband beschränkt möglich.

Im folgenden wird die Erfindung anhand eines Ausführungsbeispiels und der Zeichnungen näher erläutert; es zeigen:

| | |
|---|---|
| Fig. 1 | ein Blockschaltbild eines Direct-Sequence-Spread Spectrum Systems (DS-SSS), |
| Fig. 2 | ein Diagramm zur Funktionserläuterung, |
| Fig. 3 | eine schematische Darstellung des Aufbaus eines Mikrozellular-Systems, |
| Fig. 4 | ein Blockschaltbild des Aufbaus einer Zelle mit möglichen Störeinflüssen, |
| Fig. 5 | linear rückgekoppelte Schieberegister zur Erzeugung von Gold-Codes, |
| Fig. 6a,6b, | je eine Tabelle der Anfangswerte für optimierte Code-Sets mit zwei bestimmten Polynomen, |
| Fig. 7 | ein Blockschema eines DS-SS-Senders, |
| Fig. 8 | ein Blockschema eines Mehrpfad-Empfängers, |
| Fig. 9 | ein Blockschema des Demodulators des Empfängers von Fig. 8; und |
| Fig. 10 bis 15 | Diagramme zur Funktionserläuterung. |

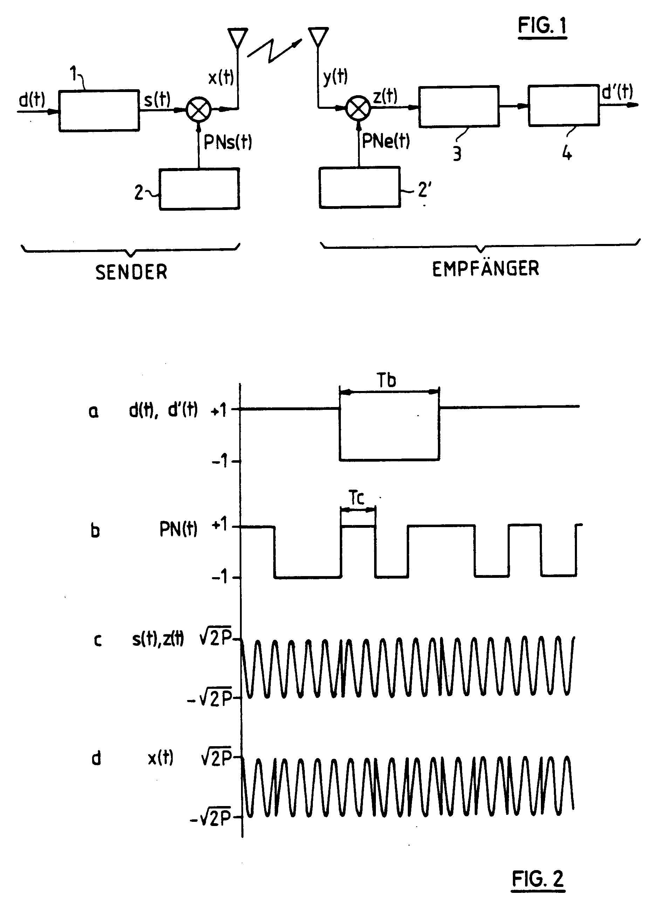

In Fig. 1 ist das Prinzip eines Direct Sequence-Spread Spectrum Systems (DS-SSS) dargestellt. Im Sender wird das Datensignal $d(t)$ in einem Modulator 1 moduliert. Das am Ausgang des Modulators 1 erhältliche Signal $s(t)$ wird mit einer in einem Codegenerator 2 erzeugten Hilfsfunktion oder Spreizsequenz $PN_s(t)$ codiert, d.h. multipliziert und als Datensignal $x(t)$ zu einem Empfänger übertragen. Der letztere decodiert des Empfangssignal $y(t)$ mit Hilfe derselben, in einem lokalen Generator $2'$ erzeugten Hilfsfunktion $PN_e(t)$. Das aus dieser Decodierung gewonnene Signal $z(t)$ durchläuft ein Bandpassfilter 3 und einen Demodulator 4, an dessen Ausgang das Datensignal $d'(t)$ erhältlich ist.

Die einzelnen Signale sind in Fig. 2 schematisch dargestellt, und zwar in Zeile a das Signal $d(t)$ bzw. $d'(t)$, in Zeile b die Hilfsfunktion $PN(t)$, in Zeile c das Signal s(t) bzw. z(t) und in Zeile d das Signal x(t).

Die Hilfsfunktionen PN(t) sind pseudo-statistische, binäre Codesequenzen, welche beispielsweis durch rückgekoppelte Schieberegister einfach erzeugt werden können. Ihr Leistungsspektrum weist ungefähr eine (sin x/x) hoch 2-förmige Enveloppe mit einer ersten Nullstelle bei der Frequenz 1/Tc auf, wobei Tc der kleinsten Rechteck-Impulsdauer der Hilfsfunktion, der sogenannten Chip-Dauer entspricht (Zeile b). Mit Tb (Zeile a) ist die Symboldauer des nachrichtentragenden Signals d(t), d'(t) bezeichnet, welche gleich einem ganzzahligen Vielfachen der Chipdauer Tc gewählt ist. In praktischen Systemen werden für PN(t) Funktionen der Länge M chip mit einer Periodendauer M.Tc repetitiv verwendet. Typische Werte für 1/Tc sind einige 10 MHz und für M beispielsweise 1023, Tb wird oft gleich M.Tc gewählt.

Aus dem Mobilfunk ist das Prinzip der Zellularstruktur bekannt, bei welcher innerhalb des Netzes mehrere mobile Benützer gleichzeitig Datenverbindungen oder digitale Sprachverbindungen zu anderen mobilen oder orstfesten Gegenstationen unterhalten können. Durch Verkleinern der Zellengrösse kann man eine solche Zellularstruktur als Mikrozellular-System auf beispielsweise ein Gebäude oder ein Fabrikareal anwenden.

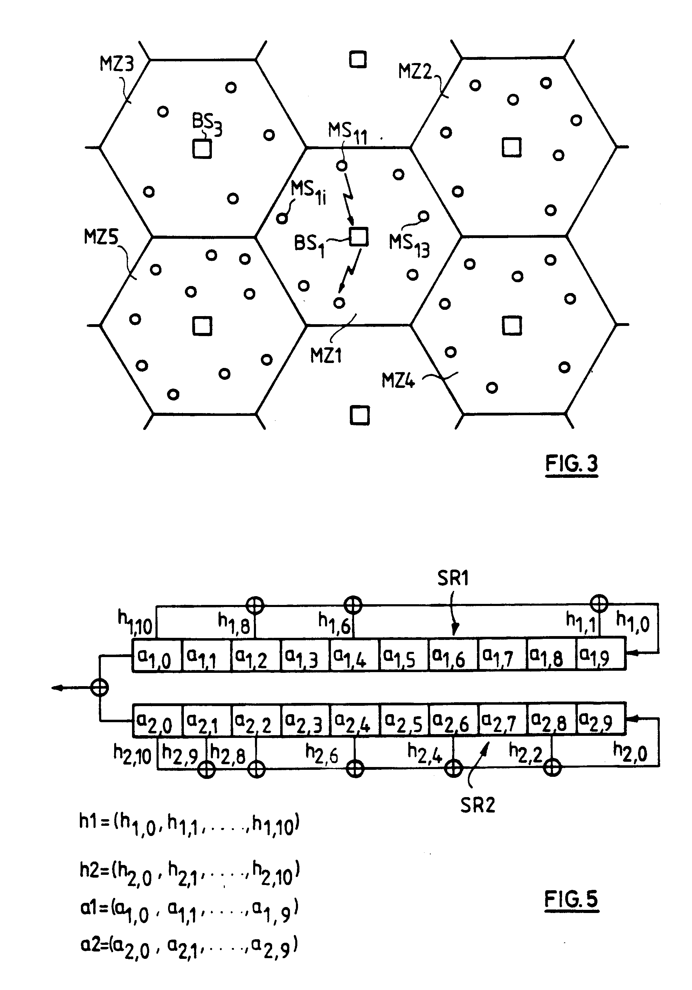

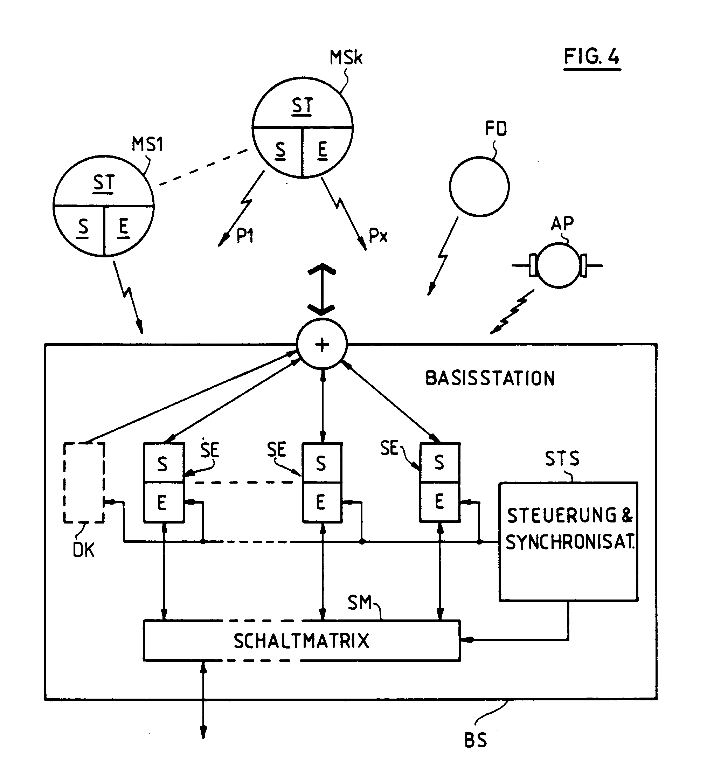

In Fig. 3 ist eine solche Aufteilung des Versorgungsgebiets in Mikrozellen dargestellt, wobei eine Mikrozelle MZ beispielsweise ein Stockwerk oder eine einzelne Fabrikhalle umfassen kann. Das nachfolgend beschriebene System gestattet den Betrieb eines cordless LAN innerhalb einer Mikrozelle MZ. Der Betrieb unabhängiger Mikrozellen nebeneinander ist durch die Codeauswahl ebenfalls vorgesehen. Hingegen bildet ein Funkverkehr über die Mikrozellen MZ hinaus und zwischen diesen nicht Gegenstand der vorliegenden Patentanmeldung. Fig. 4 zeigt den Aufbau einer Mikrozelle mit möglichen Störeinflüssen.

Gemäss den Fig. 3 und 4 enthält jede Zelle MZ eine Anzahl von k Mobilstationen MS1 bis MSk und eine zentrale Basisstation BS. Jede Mobilstation, von denen in Fig. 4 die beiden Stationen MS1 und MSk schematisch dargestellt sind, enthält einen Sender S, einen Empfänger E und eine Steuereinheit ST; die zentrale Basisstation BS besteht aus n Sende-Empfängern SE, aus einer Schaltmatrix SM mit einer durch einen Doppelpfeil angedeuteten Verbindung zu externen leitungsgebundenen Benützern, aus einer Steuerstufe STS zur Steuerung und Synchronisation und aus einem optionalen Dienstkanalsender DK. Die Anzahl k der möglichen LAN-Benützer in einer Zelle MZ ist normalerweise wesentlich grösser als die Anzahl n der gleichzeitig möglichen Verbindungen entsprechend den n Kanälen der Basisstation BS. Das Verhältnis von k zu n ist beispielsweise gleich 200 zu 20. Die Verbindungen innerhalb der Zelle laufen nach einem einfachen Protokoll ab, das noch beschrieben wird.

Alle Verbindungen zwischen den Benützern MS einer Zelle MZ und der Basisstation BS verwenden, nach Richtung getrennt, zwei breite Frequenzbänder. Das heisst, dass alle Sender SE der Benützer MS eine Mittenfrequenz von beispielsweise 914 MHz und alle Sender der Basisstation BS eine Frequenz von beispielsweise 959 MHz verwenden. Als Zugriffsverfahren wird CDMA (Mehrfachzugriff) verwendet, so dass zwischen Mobilstationen und der Basisstation gleichzeitig mehrere Funkverbindungen abgewickelt werden können, wobei diese Verbindungen simplex-, halbduplex- oder vollduplexfähig ausgeführt sein können.

Wie in Fig. 4 angedeutet ist, kann die Verbindung zwischen einer bestimmten Mobilstation MS und der Basisstation BS durch verschiedene Störeinflüsse beeinträchtigt werden. So verursachen für einen bestimmten Benützer alle anderen Benützer in der selben Zelle Störungen, welche durch die Kreuzkorrelationseigenschaften der verwendeten Codes bestimmt sind. Ein weiterer Störeinfluss besteht darin, dass die durch Reflexion verursachte Mehrwegausbreitung (Pfade P1, Px in Fig. 4) in Gebäuden und in deren Umgebung im Empfangssignal frequenzselektiven Schwund bewirkt, was bei schmalbandigen Uebertragungsverfahren zu erheblichen Uebertragungsfehlern führen kann. Weitere Störquellen sind elektrische Apparate AP und schmalbandige Funkdienste FD, die im selben Frequenzband arbeiten.

Für den Erfolg eines derartigen DS-SSS sind eine sorgfältige Auswahl der verwendeten Spreizungscodes und eine effiziente Realisierung des Empfängers wesentlich. Für die letztere werden für die wichtigsten Baugruppen digitale Signalverarbeitungs-Prozessoren eingesetzt und es wird durch optimale Zusammenfügung der programmierbaren Sender- und Empfängerblöcke der Aufbau einer flexiblen Zellenstruktur ermöglicht. Der Empfänger ist ein Korrelationsempfänger, dessen Vorteil, insbesondere Mehrweg-Diversity und freie Wahl der Codelänge und Datenrate voll zur Geltung gebracht werden.

Wie schon erwähnt, wird bei der DS-Modulation das Datensignal mit einer Spreizsequenz codiert und das Empfangssignal wird mit Hilfe der Inversen zur Spreizsequenz decodiert. Bei einer binären Sequenz mit den erlaubten Zuständen "+1" und "-1" sind die Spreizsequenz und ihre Inverse identisch. Wenn die Rückspreizsequenz im Demodulator zeitlich so erzeugt wird, dass sich die Effekte der Codierung und der Decodierung jederzeit nahezu aufheben, dann spricht man von Synchronität zwischen der Spreizsequenz im Empfangssignal und der im Demodulator erzeugten Rückspreizsequenz. Für eine synchrone Demodulation muss daher einerseits die Rückspreizsequenz die Inverse zur Spreizsequenz, und anderseits muss der zeitliche Versatz der Sequenz im Empfangssignal und der lokal im Demodulator erzeugten Rückspreizsequenz null sein.

Wird die Spreizsequenz periodisch wiederholt, dann darf der genannte zeitliche Versatz auch ein Vielfaches der Periodendauer sein. Spezielle Eigenschaften zeigen Systeme, bei denen die Periodendauer der Spreizsequenz gerade der Datenbitdauer Tb (Fig. 2) entspricht. Aus der Annahme, dass die Codesequenz aus M Chips besteht und bei idealisierten Verhältnissen jedes Chip mit einem Rechteckimpuls der Dauer $Tc = Tb/M$ dargestellt wird, können folgende Schlussfolgerungen abgeleitet werden.

a) Für DS-Signale, die beim Empfänger datensynchron einfallen, bei denen also der genannte zeitliche Versatz Delta s der einzelnen Signale sich jeweils nur um Vielfache der Datenbitdauer $Tb = M.Tc$ unterscheidet, ergibt sich eine spezielle Situation, wenn der Demodulatorcode auf den Code eines einzelnen Empfangssignals synchronisiert ist. Dann sind die Delta s aller Signale ein Vielfaches von M.Tc und mathematisch erscheinen nur gerade und ungerade Korrelationsfunktionen mit dem Argument null. Für das Nutzsignal nehmen gerade und ungerade Autokorrelationen im Nullpunkt den Wert M an und für Störsignale sind die ungerade und die gerade Kreuzkorrelationsfunktion gleich gross. Dabei können die Codesequenzen derart optimiert werden, dass diese Störterme möglichst klein sind.

b) Für einfallende DS-Signale, die nicht mit der Rückspreizsequenz synchron sind, d.h. Delta s beliebige Werte annehmen kann, können auch alle Werte für die geraden und ungeraden Korrelationsfunktionen auftreten. Dies heisst für Störsignale, dass die Kreuzkorrelationsfunktionswerte, und für das nichtsynchrone Nutzsignal, dass die Autokorrelationsfunktionswerte möglichst klein sein sollten.

Aufgrund dieser beiden Schlussfolgerungen werden nun für mikrozellulare Systeme folgende Parameter und Massnahmen zur Bestimmung der Codesequenzen vorgeschlagen:

- Aus mehreren Sequenzsets wird jeder Zelle genau ein Set zugeordnet.
- Sequenzen aus verschiedenen Sets müssen paarweise die Eigenschaft haben, dass die Absolutwerte der normierten periodischen Kreuzkorrelationsfunktionen für alle Werte viel kleiner sind als 1. Dadurch werden nichtsynchrone DS-Störsignale genügend unterdrückt. Aus diesem Parameter folgt, dass eine Sequenz nur einem Set angehören darf und dass auch zyklisch verschobene Versionen dieser Sequenz in keinem anderen Set vorkommen dürfen. Diesen Anforderungen genügende Sequenztypen sind PN-Sequenzen, beispielsweise Gold- oder Kasamisequenzen.
- Bei Sequenzen innerhalb eines Sets müssen paarweise die Kreuzkorrelationsfunktionen um den Nullpunkt optimal klein sein. Dadurch werden Störsignale von DS-Verbindungen innerhalb derselben Zelle, die datensynchron bei einem Empfänger eintreffen, fast vollständig unterdrückt.
- Pro Set ist mindestens eine Sequenz mit günstigen Eigenschaften für die Synchronisation vorhanden.
- In der zentralen Basisstation werden die Sendesignale für alle gleichzeitigen Verbindungen datensynchron aufbereitet, so dass in dem Summensignal, das die Mobilstationen empfangen, die Signalanteile der verschiedenen Verbindungen einer Zelle datensynchron sind.
- Die Mobilstationen verwenden den Datentakt des Empfangssignals als Datentakt ihres Sendesignals, wodurch erreicht wird, dass der Offset im Datentakt zweier DS-Signale derselben Zelle bei der Basisstation nur von der Laufzeit der Signale abhängt.
- Zusätzlich kann vorgesehen werden, dass die Basisstation Steuersignale aussenden kann, um die Signale der Mobilstationen zu synchronisieren und ihre Leistung zu regeln.

Jede Zelle verfügt über ein Set von $n+1$ Spreizsequenzen, wovon eine einen für die Synchronisation besonders günstigen Verlauf der Autokorrelationsfunktion aufweist. Diese spezielle Sequenz wird zum Betreiben des Dienstkanals DK benützt, welcher eine Simplexverbindung von der Basisstation BS zu den Mobilstationen MS bildet und für den Verbindungsaufbau reserviert ist. Die übrigen n Sequenzen dienen ausschliesslich der Datenübertragung einschliesslich Signalisierung zwischen den Mobilstationen MS und der Basisstation BS.

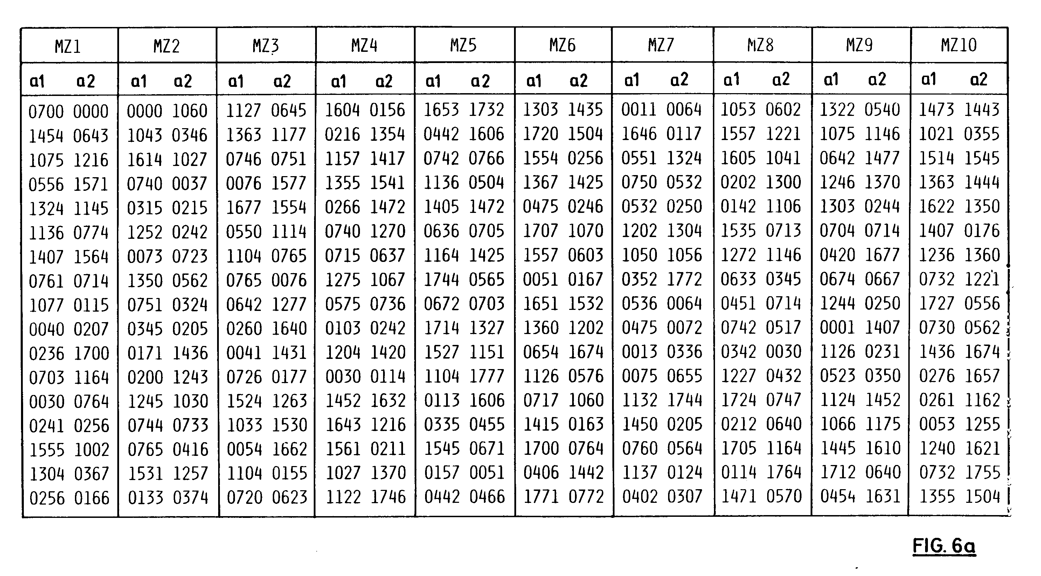

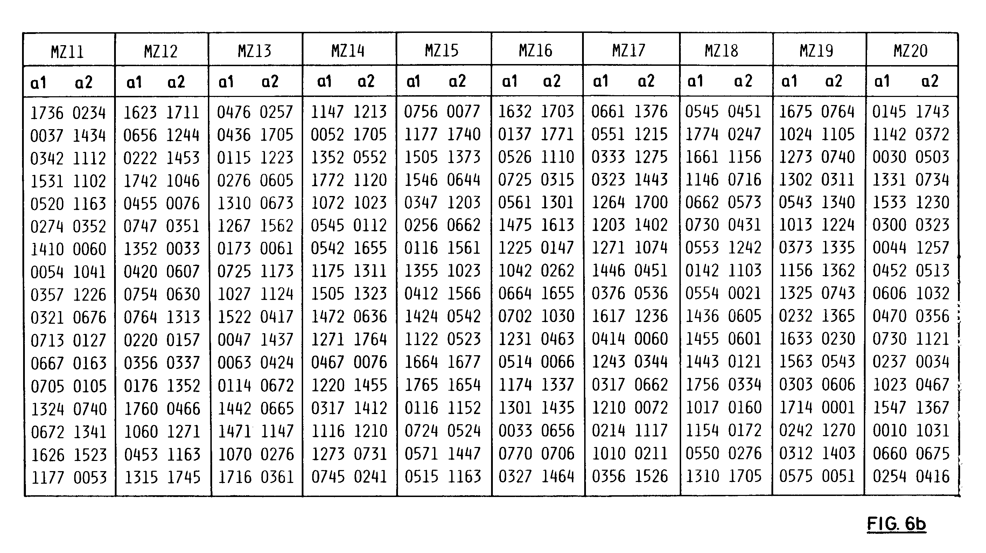

Eine Suche nach die genannten Kriterien erfüllenden optimalen Sequenzen einer Familie von Goldcodes ergab insgesamt 20 Sets zu je 17 Sequenzen, die in einem Mikrozellularsystem eingesetzt werden können. Diese Sequenzen können mit zwei rückgekoppelten Schieberegister SR1 und SR2 der in Fig. 5 dargestellten Art erzeugt werden. Die einzelnen Codegeneratoren 2, 2' (Fig. 1) für die 340 Sequenzen unterscheiden sich dabei nur in den Anfangswerten a1, a2 der beiden Schieberegister SR1 und SR2. Diese Anfangswerte sind in den Fig. 6a und 6b für die 340 optimierten Code-Sets mit den Polynomen $h1 = 3025$ (oktal 8) und h2 = 2527 (oktal 8) angegeben, und zwar in Fig. 6a für die Zellen 1 bis 10 und in Fig. 6b für die Zellen 11 bis 20. Dabei bezeichnet jeweils die erste Sequenz jeder Zelle die Dienstkanalsequenz. Wenn die 20 möglichen Sequenzsets in einer räumlich entfernteren Zelle wieder verwendet werden, dann kann mit Hilfe dieser optimierten Sequenzen ein Zellularsystem mit beliebig vielen Zellen aufgebaut werden.

Zur Ausnützung der Vorteile der optimierten Codes werden die Codegeneratoren in der Basisstation synchronisiert, so dass die Signale aller n Sender der Basisstation bei den Mobilstationen datenbitsynchron ankommen und dadurch die optimierten Korrelationswerte auch wirklich erreicht werden. Die Mobilstation ihrerseits synchronisiert ihre Codesequenz wieder bitsynchron auf das von der Basisstation empfangene Signal. Da dadurch die Codesequenz höchstens mit einer der doppelten Laufzeit zwischen Basis- und Mobilstation entsprechenden Verzögerung bei der Basisstation ankommt, wird die zeitliche Unsicherheit der Ankunftszeit des Signals minimal. Bei typischen Distanzen von maximal 50 Metern entspricht das nur wenigen Codechips. Wenn beim datensynchronen Aussenden aller betriebenen Kanäle in der Basisstation pro Datenbit die Spreizsequenz genau einmal ausgesendet wird, kann ein Kanalwechsel (= Sequenzwechsel) ohne Synchronisationsverlust erfolgen und der Nachteil der im Vergleich zu einem Matched Filter-Empfänger längeren Synchronisationszeit des Korrelationsempfängers ist nicht mehr vorhanden.

Jede Mobilstation MS, deren Sende- und Empfangseinheit SE (Fig. 4) einen programmierbaren Codegenerator aufweist, kennt alle in ihrer Zelle für die Datenübertragung verwendeten Sequenzen und den Dienstkanalcode und kann diese auch selbst erzeugen. Jede Mobilstation ist durch eine im System nur einmal vorkommende Teilnehmeradresse (Identifikation) gekennzeichnet, und die Basisstation kennt alle Teilnehmeradressen ihrer Zelle. Solange eindeutig Teilnehmeradressen zugeordnet werden können, können einer Zelle beliebig viele Mobilstationen zugewiesen werden. Begrenzt ist einzig die Anzahl der gleichzeitig in Betrieb stehenden Mobilstationen, und zwar auf die Anzahl n der Kanäle der Basisstation.

Alle Mobilstationen, die nicht aktiv in einer Verbindung stehen, hören den Dienstkanal ab, der für den Verbindungsaufbau eine wesentliche Rolle spielt. Sofern die Basisstation nicht alle n Datenübertragungskanäle besetzt hat, teilt sie auf dem Dienstkanal allen Mobilstationen die freien Kanäle mit. Muss eine Mobilstation von der Basisstation angerufen werden, geschieht dies ebenfalls auf dem Dienstkanal. Da alle Sender für beliebige Sequenzen programmiert werden können, kann für den Dienstkanal ein freier Sender oder als Option ein speziell für diesen Zweck reservierter Sender verwendet werden, wie dies in Fig. 4 mit dem Dienstkanalsender DK angedeutet ist.

Verbindungen innerhalb der Zelle erfolgen nach folgendem Protokoll:

a) Basisstation BS ruft Mobilstation MS: Die BS ruft über den Dienstkanal die MS mit einer bestimmten Identifikation auf und teilt mit, auf welchem Kanal (Sequenz) sie Antwort erwartet. Die Mobilstation hat dann die Möglichkeit, auf die entsprechende Sequenz umzuschalten und die Kommunikation zu starten. Die BS beginnt gleichzeitig auf dem entsprechenden Kanal (Sequenz) eine Grobsynchronisation, die wegen der kleinen zeitlichen Unsicherheit sehr schnell möglich ist. Damit kann die Datenübertragung beginnen. Die weiteren Informationen wie Signalisierung, Leistungsregelung etc. werden innerhalb des Datenstroms übermittelt.

b) Mobilstation ruft Basisstation: Die MS entnimmt der Information auf dem Dienstkanal, auf welchem Kanal (Sequenz) die BS auf den Aufbau einer neuen Verbindung wartet. Sie stellt ihren Codegenerator auf diese Sequenz und startet den Aufruf. Dabei wird auch die Adresse der gewünschten Gegenstation übermittelt. Die BS nimmt anschliessend mit der gewünschten Gegenstation Verbindung auf und schaltet dann die beiden MS über die Schaltmatrix zusammen. Während der Datenübermittlung überwacht sie die Signalisierung zwischen den beiden MS, um die Verbindung am Schluss wieder zu trennen. Dazwischen kann sie selbst weitere Steuerdaten z.B. für die Leistungsregelung oder Synchronisation der MS einfliessen lassen.

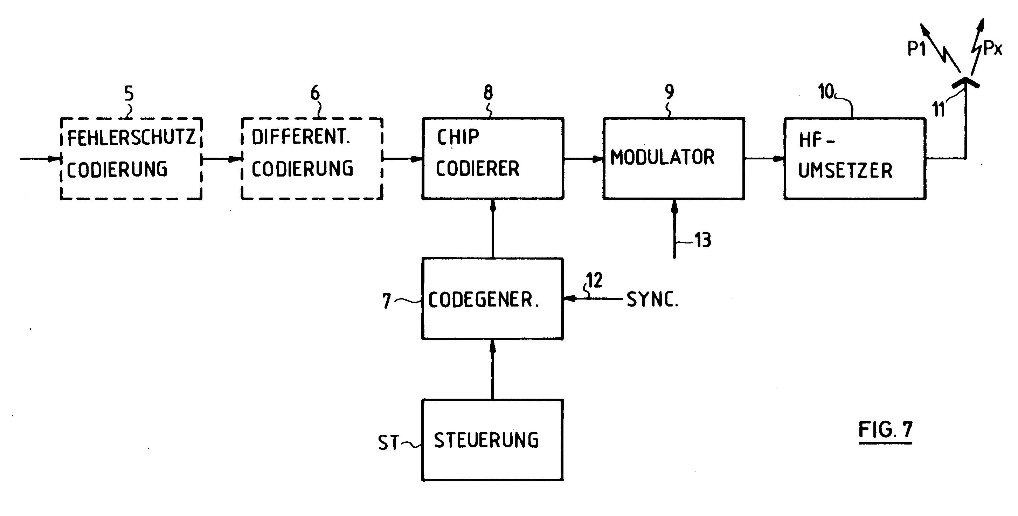

In Fig. 7 ist ein schematisches Blockschaltbild eines Spread Spectrum-Senders S dargestellt, der sowohl in der Basisstation BS als auch in den Mobilstationen MS verwendet wird. Dieser besteht darstellungsgemäss aus folgenden Blöcken: Codierer 5 für Fehlerkorrektur, differentieller Codierer 6 (beide fakultativ), programmierbarer Codegenerator 7, Steuereinheit ST, Chip Codierer 8, Modulator 9, HF-Umsetzer 10 (fakultativ) und Antenne 11.

Der programmierbare Codegenerator 7, dessen Programmierung durch die Steuereinheit ST erfolgt, erzeugt aus dem vordefinierten Codesatz einen bestimmten Spreizcode. Beim Verbindungsaufbau ist dies der Dienstcode (Dienstkanalsequenz), nachher wird in der Basisstation wie in der Mobilstation der von der Basisstation bestimmte Code gewählt. Normalerweise wird die Codesequenz einmal pro Datenbit erzeugt. In der praktischen Ausführung besteht der Codegenerator 7 aus zwei rückgekoppelten Schieberegistern SR1 und SR2 (Fig. 5) mit programmierbaren Rückkoppelungen und Anfangswert-Registern. Die erzeugten Codes werden durch einen Synchronisationseingang 12 des Codegenerators 7 zeitlich genau gesteuert, so dass die Basisstation alle Sendecodes in einer wohldefinierten gegenseitigen Phasenlage erzeugen und damit die guten Kreuzkorrelationseigenschaften der speziell ausgesuchten Codes ausnützen kann.

An dieser Stelle sei vorausgeschickt, dass der Empfänger E (Fig. 4) ebenfalls einen Codegenerator besitzt. Dieser Codegenerator des Empfängers kann in den Mobilstationen vom Sender S mitbenützt werden. Besitzt jedoch der Sender einen eigenen Codegenerator, dann wird der Sendecode auf den Empfangscode synchronisiert. Durch diese Synchronisation wird die Zeitunsicherheit für das Eintreffen des Signals der Mobilstation bei der Basisstation auf wenige Codebits (Chips) reduziert, wodurch eine drastische Verkürzung der für die Akquisition benötigten Suchzeit erreicht wird.

Der Codierer 5 für die Fehlerkorrektur dient dazu, die zu sendenden Daten mit Redundanz zur Fehlererkennung und/oder Fehlerkorrektur, beispielsweise mit linearen Blockcodes oder mit Faltungscodes, zu versehen. Die differentielle Codierung durch den Codierer 6 dient zur Vereinfachung der Demodulation. Die uncodierten oder entsprechend codierten Daten werden im Chip Codierer 8 mit dem Spreizcode verknüpft, was im einfachsten Fall durch eine Modulo-2-Addition von Daten und Code geschieht.

Im Modulator 9 werden die codierten Daten auf einen Träger moduliert, vorzugsweise durch binäre Phasenumtastung (BPSK), und gefiltert. Das modulierte Signal wird direkt oder nach Umsetzung in ein anderes Frequenzband durch den HF-Umsetzer 10 der Antenne 11 zur Abstrahlung zugeführt. Im Modulator 9 der Mobilstation kann zusätzlich noch eine Vorrichtung zur Leistungsregelung enthalten sein, die dann von der Steuereinheit ST, welche die von der Basisstation empfangenen Kontrollsequenzen umsetzt, über einen Eingang 13 entsprechende Regelsignale erhält.

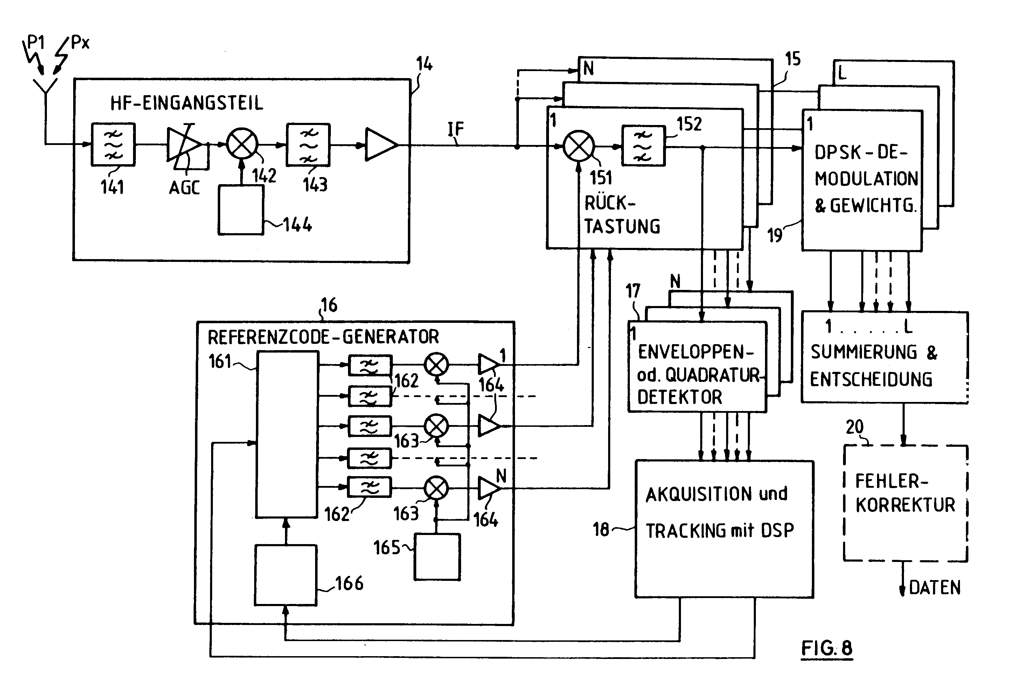

Fig. 8 zeigt ein Blockschema eines erfindungsgemässen Korrelationsempfängers, der für die Basisstation und für jede Mobilstation aus folgenden Baugruppen besteht: HF-Eingangsteil 14, N-Kanal Rücktastung 15, N-Kanal Referenzcode-Generator 16, N-Kanal-Enveloppen- oder Quadraturdetektor 17, Akquisitions-und Trackingschaltung 18, L-Kanal-Demodulator 19 und ein fakultativ vorgesehener Fehlerschutz-Decoder 20.

Das über die Pfade P1 bis Px zur Antenne des Empfängers gelangende, breitbandige Empfangssignal wird im HF-Teil 14 in einem Bandpassfilter 141 gefiltert, um Signale ausserhalb des verwendeten Frequenzbandes zu unterdrücken. Anschliessend wird das Signal verstärkt und auf eine Zwischenfrequenz umgesetzt (Mischer 142, Filter 143, Lokal-Oszillator 144 mit beispielsweise 889 MHz). Eine automatische Verstärkungsanlage AGC steuert den Empfangsverstärker so aus, dass auch schmalbandige Störsignale nicht zu einer Sättigung des Verstärkers oder zur Uebersteuerung der Korrelatoren führen können. Das Empfangssignal liegt in zwei breiten Frequenzbändern mit einer Mittenfrequenz von beispielsweise 914 MHz und 959 MHz, das umgesetzte ZF-Signal am Ausgang des HF-Eingangsteils hat beispielsweise eine Mittenfrequenz von 70 MHz.

In der Rücktaststufe 15 wird das ZF-Signal in einem Mischer 151 mit einem Referenzsignal multipliziert und anschliessend bandpassgefiltert (Filter 152). Durch die Rücktastung entsteht bei Synchronität zwischen dem Spreizcode im ZF-Signal und dem Code im Referenzsignal aus dem breitbandigen Eingangssignal mit der Bandbreite von ca. 2/Tc ein Schmalbandsignal der Bandbreite von etwa 2/Tb (Fig. 2). Das Bandfilter 152 hat eine wählbare Bandbreite und unterdrückt durch die Rücktastung gespreizte Störsignale. Es erlaubt auch, die Bandbreite während der Akquisition relativ gross zu halten, um eine höhere Suchrate zu ermöglichen.

Der Referenzcode-Generator 16 ist flexibel programmierbar und enthält eine Stufe 161 zur gleichzeitigen Generierung des Empfangscodes für jeden der N Kanäle mit beliebiger Codephase. Es werden also N gegeneinander zeitlich verschobene Versionen des gleichen Codes erzeugt. Jeder der N Kanäle enthält ein Filter 162, einen Mischer 163 und ein Verstärker 164. Die Verzögerungszeiten zwischen den einzelnen Codeversionen können für alle N Kanäle einzeln programmiert werden. Die Auflösung, mit der die gegenseitigen Verschiebungen eingestellt werden können, beträgt einen Bruchteil, vorzugsweise die Hälfte, eines Chips. Die Stufe 161 ist von einem Codetakt-Oszillator 166 getaktet, die Mischer 163 von einem Lokal-Oszillator 165 von beispielsweise 80,7 MHz.

Die rückgespreizten Signale werden sowohl den Enveloppen- oder Quadraturdetektoren 17 als auch den Demodulatoren 19 zugeführt. Mit den N Detektoren wird unabhängig von den empfangenen Daten die Signalstärke an den Ausgängen der N Korrelatoren (Rücktastung 15) gemessen, und aus diesen Werten werden die erforderlichen Regelsignale für die Akquisition (= Grobsynchronisation) und das Tracking (= Feinsynchronisation) in der Schaltung 18 gewonnen.

In der Akquisitions- und Trackingschaltung 18 werden die N Detektorsignale über eine Zeit Ti (variabler Parameter) integriert, analog-digital gewandelt und einem digitalen Prozessor (im speziellen einem digitalen Signalprozessor, DSP) zugeführt. Die Integrationszeit wird vom DSP gesteuert. Dies erlaubt eine dauernde Anpassung des Verhaltens der Synchronisationsschaltung an das momentane Signal-Geräuschverhältnis. Mit Hilfe spezieller Algorithmen und Strategien werden die Regelsignale berechnet, um den N-Kanal-Referenzcode Generator 16 zu steuern. Der Prozessor kennt jederzeit die Verzögerungszeiten der N Kanäle des Generators 16 untereinander. Damit kann er, je nach Art des Mehrwegprofils, dynamisch die N Kanäle optimal dem Mehrwegprofil anpassen. Diese Zuweisung der Kanäle kann man so wählen, dass die Demodulation und das Code-Tracking optimal erfolgt. Ebenso ist es möglich, weitere Funktionen zu erhalten, wie z.B. die Messung des Signal-Geräuschverhältnisses. Die so eingebaute Intelligenz erlaubt eine schnelle Akquisition des empfangenen Codes und auch ein robustes Tracking bei Mehrwegausbreitung. Zudem wird im Prozesor auch die Gewichtung der einzelnen N Kanäle für die Selektion im Demodulator berechnet.

Die Vorteile des Prozessors (DSP) liegen vor allem in der optimalen Ausnützung der Information über die herrschenden Ausbreitungsbedingungen, da man den Uebertragungskanal in Echtzeit dauernd ausmisst. Im Gegensatz zu analogen Akquisitions-und Trackingschaltungen, wo meist nur gewichtete (und meist noch gemittelte) Summen für die Regelung herangezogen werden, kann der Prozessor zusätzlich Informationen aus den N einzelnen Kanälen gewinnen. Es können beispielsweise die Verzögerungszeiten der N Kanäle des Generators 16 untereinander so programmiert werden, dass die meisten Kanäle ein möglichst starkes Empfangssignal erhalten. Bei einem analogen System ist - vom Aufwand her - nur eine beschränkte Flexibilität erhältlich. Damit kann es geschehen, dass einzelne Kanäle nur Rauschen empfangen, oder anderseits gewisse Echokomponenten wegen der limitierten Flexibilität nicht ausgenützt werden können. Beides führt zu einer Verschlechterung des Systemverhaltens, verglichen mit der flexiblen Lösung.

Im Demodulator 19 erfolgt die Rückspreizung der übertragenen Daten. Dabei kann, durch geeignete Gewichtung der einzelnen N Kanäle, sowohl eine Auswahl des besten Kanals (Selection Combining), wie auch eine Kombination der Energien verschiedener Kanäle (Equal Gain bzw. Maximum Ratio Combining) vorgenommen werden. Nach der Bitentscheidung wird noch die Fehlerkorrektur vorgenommen, falls entsprechende Redundanz im Sender zugeführt wurde.

Um die Signale von L Empfangskanälen mit möglichst einfachen Mitteln demodulieren zu können, wird beim erfindungsgemässen Funkübertragungssystem als Primärmodulation DPSK ( = Differential Phase Shift Keying) gewählt. Damit entfällt die Rückgewinnung des Trägersignals aus dem Empfangssignal, was für eine kohärente Demodulation eines PSK-Signales nötig wäre. Bei DPSK wird als pseudo kohärentes Trägersignal das jeweils um die Bitdauer Tb verzögerte Empfangssignal verwendet, das im Unterschied zu PSK verrauscht ist. Für die Realisation mit DPSK ergeben sich aber folgende Vorteile: Es entfällt die Estimation von Trägerfrequenz und -phase; die Demodulation ist unempfindlich gegen Dopplerverschiebungen; es bestehen geringere Anforderungen an die Stabilität der Oszillatoren.

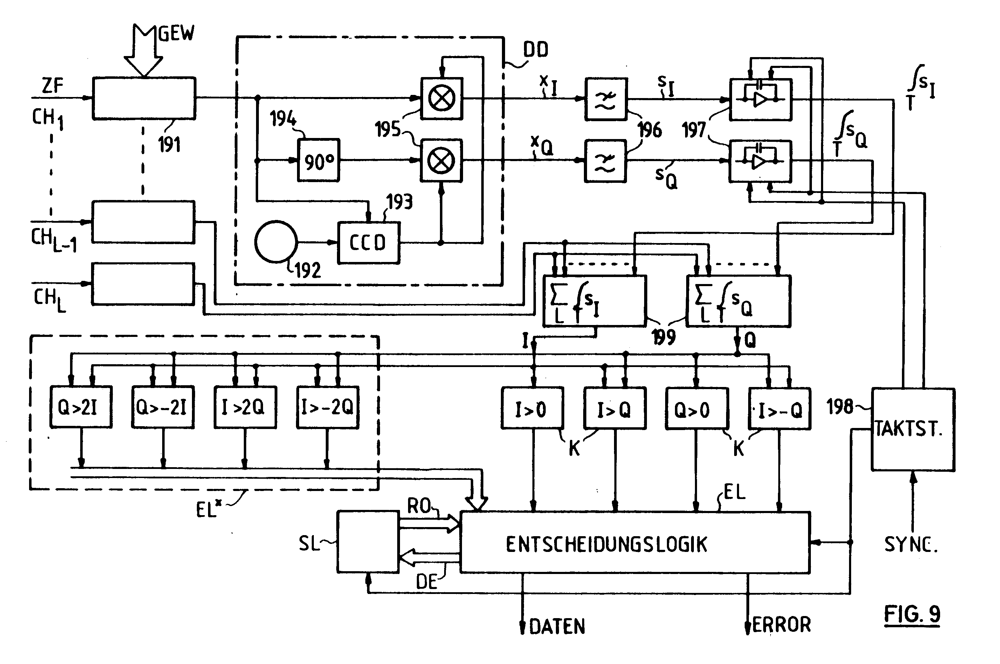

Fig. 9 zeigt ein Blockschaltbild eines DPSK-Demodulators 19 von Fig. 8. Die L Korrelatorsignale CH1 bis CHL werden nach der Rückspreizung und Bandpassfilterung in der Rücktastung 15 (Fig. 8) in eine Zwischenfrequenzlage von etwa 460 kHz gebracht und auf Abschwächer 191 geführt, die für jeden der L Empfangskanäle einzeln einstellbar sind. Die Steuerung der Abschwächer 191 vollzieht der Signalprozessor DSP (Fig. 8), der aus der Synchronisationsschaltung Akquisition und Trakking 18 (Fig. 8) Kenntnis über die Stärke der einzelnen Signale besitzt. Das mit dem Signalprozessor DSP gemessene Mehrwegprofil dient dazu, jedes Signal entsprechend seiner Empfangsqualität zu gewichten. (Man könnte auch nur das stärkste Signal für die Demodulation heranziehen; in diesem Fall würde man einen als best-of- oder Selection-Diversity-Empfänger bekannten Empfänger erhalten.) Da diese Gewichtung vorwiegend vom Verhältnis der verschiedenen Signalstärken zueinander abhängt, wird durch eine gemeinsame Abschwächung aller L Signale zudem eine AGC ( = Automatic Gain Control) für den Demodulator realisiert.

In Fig. 9 ist von den L Empfangskanälen für die Korrelatorsignale CH1 bis CHL nur ein Kanal im Detail dargestellt. Darstellungsgemäss erfolgt nach der Abschwächung (Abschwächer 191) eine differentielle Demodulation DD. Diese Stufe enthält einen Taktgeber 192, eine CCD-Verzögerungsleitung 193, einen 90° Phasenschieber 194 und zwei Mischer 195.

Die CCD-Verzögerungsleitung 193 dient dazu, gegenüber den Eingangssignalen der Demodulatoren um die Dauer eines Informationsbits (Symboldauer) verzögerte Signale zu gewinnen. Die Verzögerungszeit Tb der CCD-Elemente sollte für eine optimale Demodulation ein ganzzahliges Vielfaches der Periodendauer des Trägersignals sein, was an die Güte der verwendeten Oszillatoren und Verzögerungsleitungen extrem hohe Anforderungen stellen würde. Trotzdem bliebe eine grosse Empfindlichkeit bei Vorhandensein von Dopplerverschiebungen. Deshalb ist der DPSK-Demodulator 19 als Quadraturdemodulator ausgelegt, der nicht nur das eintreffende Signal, sondern auch eine mittels des Phasenschiebers 194 um 90° gedrehte Version des Empfangssignales demoduliert. Entsprechend weist der Ausgang der Stufe DD zwei Kanäle I und Q für das normale Signal beziehungsweise für dessen gedrehte Version auf, wobei in jedem Kanal ein Mischer 195 vorgesehen ist. Damit ist die Demodulation unabhängig von Frequenzoffset und Dopplerverschiebungen mit normalen Anforderungen an die Bauteile möglich.

Die Ausgangssignale der beiden Mischer 195 werden nach Filterung durch Tiefpässe 196 je einer Integrationsstufe zugeleitet, welche die Signale der beiden Kanäle einzeln über die Dauer Tb eines Informationsbits integriert, wobei die zeitliche Steuerung der Integratoren und Halteglieder mit dem aus dem Akquisitions- und Trackingprozessor (Fig. 8, Schaltung 18) resultierenden Symboltakt synchronisiert sein muss, was in Fig. 9 durch eine von der Schaltung 19 angesteuerte Taktsteuerung 198 symbolisiert ist.

Danach werden in zwei Stufen 199 alle Signale SI der I- und alle Signale SQ der Q-Kanäle aufsummiert. An dieser Stelle zeigt sich, weshalb - dank der Quadraturdemodulation - kleinere Anforderungen an die Präzision der Verzögerungsleitungen und der Oszillatoren gestellt werden können. Werden die Summensignale der I- und Q-Kanäle in einem rechtwinkligen Koordinatensystem aufgezeichnet, so kann eine Gerade durch den Koordinatenursprung und den Punkt des Signalvektors gezeichnet werden, der durch die I- und Q-Komponente gegeben ist. Im unverrauschten Fall bestimmen die Informationssymbole die Richtung des Signalvektors, gegeben durch die I- und die Q-Komponente, auf dieser Geraden. Die Steigung der Geraden wird bestimmt durch das Verhältnis der Verzögerungszeit der CCD-Elemente zur momentanen Periodendauer des Trägersignales. Schwankungen der Oszillatorfrequenzen sowie Dopplerverschiebungen resultieren somit nur in einer Drehung der Geraden um den Koordinatenursprung. Die Steigung der Geraden kann aber in einer Entscheidungslogik geschätzt werden. Eine Kompensation ist möglich, wenn sich die Gerade nicht zu schnell dreht.

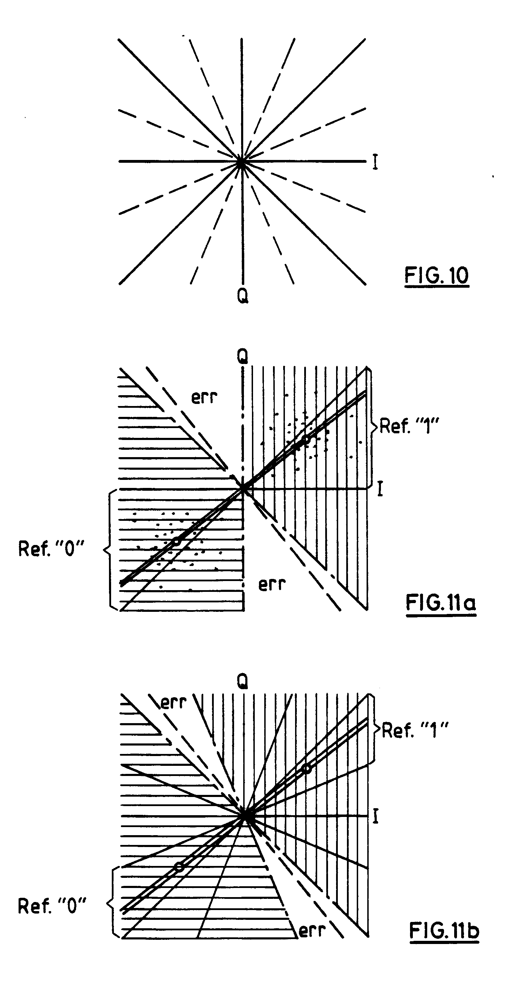

Zur Entscheidung über den Datenwert eines übertragenen Informationsbits wird die I/Q-Ebene gemäss Fig. 10 in acht Sektoren (Oktanten) aufgeteilt, wobei die vollen Linien die Sektorengrenzen für die Entscheidungslogik EL des DPSK-Demodulators und die gestrichelten Linien die Sektorengrenzen für einen optionalen Zusatzteil EL* symbolisieren. Am Eingang der Entscheidungslogik sind vier Komparatoren K vorgesehen, mit deren Hilfe sich feststellen lässt, welchem Oktant die eintreffenden Signale angehören. Falls keine Rauschanteile vorhanden sind, kann der Symbolwert folgendermassen geschätzt werden:

Vergleiche den Sektor, der für das aktuelle Symbol entscheidend ist, mit dem Sektor, in dem die Signale des vorangegangenen Symbols lagen. Sind es dieselben oder benachbarte Oktanten, so haben beide Symbole denselben Wert, andernfalls sind sie verschieden. Im unverrauschten Fall hängt die Drehung der Geraden vom Koordinatenursprung zu den Signalvektoren lediglich vom Frequenzoffset und Frequenzdriften der Sende- und Empfangsoszillatoren und von Aenderungen der Verzögerungszeit der CCD-Elemente. ab. Selbst bei Verwendung sehr ungenauer Elemente kann praktisch ausgeschlossen werden, dass die Drehung der Geraden für zwei nachfolgende Symbole mehr als 45° (Oeffnungswinkel eines Sektors) beträgt. Somit kann der Demodulator in einer rauschfreien Umgebung immer korrekt entscheiden, ob sich die Polarität eines Symboles gegenüber den vorangegangenen geändert hat. Der eigentliche Datenwert kann mit Sicherheit nur dann bestimmt werden, wenn die Unsicherheit über den Winkel, der die Gerade überhaupt für einen bestimmten übertragenen Datenwert annehmen kann, wesentlich kleiner als 180° ist. Falls dies nicht der Fall ist (grosser Frequenzoffset), besteht eine Unsicherheit, ob alle Symbole korrekt oder alle Symbole invertiert demoduliert wurden. Diese Unsicherheit kann aber durch eine Präambel in den zu übertragenden Daten eliminiert werden. Die Entscheidungslogik kann durch eine einfache leicht zu integrierende Maschine mit acht möglichen Zuständen beschrieben werden. Die Zustände repräsentieren den Sektor des vorangegangenen Signalvektors. Für jeden Zustand gibt es eine Abbildungsvorschrift, welche die Identifikation der möglichen Sektoren für das nächste Symbol in die Information "Polarität gleich" resp. "Polarität geändert" umwandelt. Nach der Erkennung des Sektors für das nächste Symbol wird die Abbildung vollzogen und die Maschine geht in den Zustand, der den neuen Sektor repräsentiert.

Enthalten die Signale, die den Komparatoren zugeführt werden, zusätzlich Rauschterme, so kann für jedes übertragene Symbol irgendeiner der acht Sektoren detektiert werden. Um aber langsam Drifterscheinungen der Oszillatoren entgegenzuwirken, kann mit einer einfachen Statistik über mehrere Symbole die Auftrittswahrscheinlichkeit der decodierten Sektoren festgestellt werden. Die entsprechende Statistiklogik ist in Fig. 9 mit SL bezeichnet. Mit dieser erhält man die Information, in welchem Sektor die meisten der Signalpunkte zu liegen kommen. Dieser Sektor und der bezüglich des Koordinatenursprungs gegenüberliegende können nun als Referenzen genommen werden, um zu entscheiden, ob eine "1" oder eine "0" übertragen wurde. Entsprechend sind in Fig. 9 zwischen der Entscheidungslogik EL und der Statistiklogik SL zwei Datenleitungen RP und DO für die Referenzoktanten bzw. die detektierten Oktanten eingezeichnet.

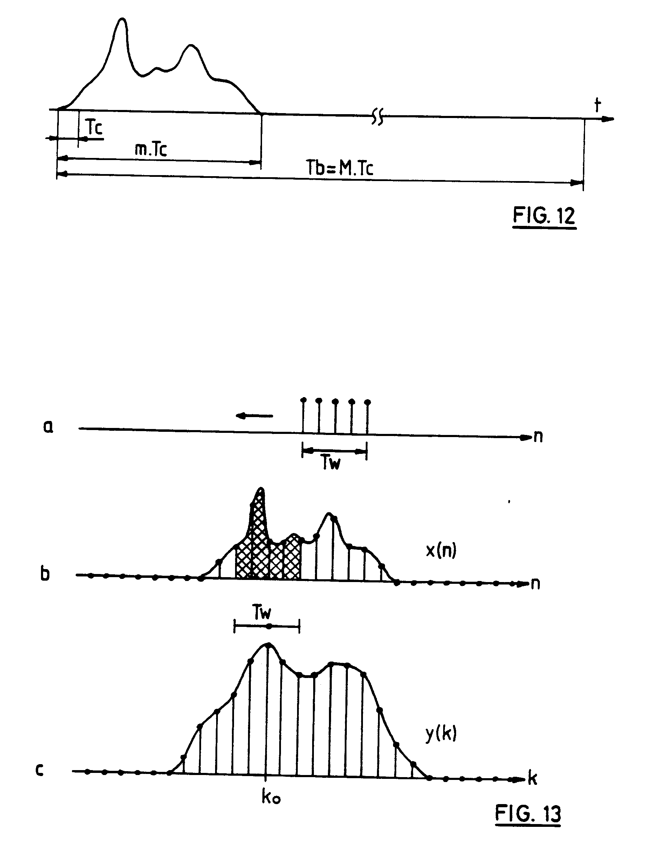

Wird ein Signal in einem zum Referenzoktanten benachbarten Sektor detektiert, so entscheidet sich die Logik für den Datenwert des Referenzoktanten. Ein Signal, das in die zu den Referenzsektoren nicht benachbarten Oktanten fällt, bewirkt ein Fehlersignal. Fig. 11a zeigt ein entsprechendes Diagramm: Mit Punkten sind die Signalvektoren vor den Komparatoren K bezeichnet, der Bereich für "0" ist horizontal und derjenige für "1" ist vertikal schraffiert und die Bereiche der Referenzoktanten sind entsprechend bezeichnet. Die mit einem Doppelstrich eingezeichnete Gerade zeigt die Lage der unverrauschten Signale, die gestrichelte Gerade die ideale Entscheidungsgrenze und die strichpunktierte Gerade die realisierbare Entscheidungsgrenze, und mit "err" ist der Bereich der Fehlersignale bezeichnet.

Diese Quantisierung Signalvektor/Oktant führt zu einem Verlust in der Detektionsempfindlichkeit, der dann am grössten wird, wenn die unverrauschten Signalvektoren auf eine Sektorengrenze zu liegen kommen. Diesem Problem kann durch eine feinere Aufteilung in die doppelte Anzahl von Sektoren begegnet werden. Dazu dient der in Fig. 8 eingezeichnete optionale Zusatzteil EL*, der eine zweite Entscheidungslogik mit vier weiteren Komparatoren darstellt, und mit dessen Hilfe die I/Q-Ebene in sechzehn Sektoren aufgeteilt werden kann. Fig. 11b zeigt ein entsprechendes Diagramm mit den gleichen Symbolen wie Fig. 11a. Es ist aus Fig. 11b offensichtlich, dass der Bereich "err" der Fehlersignale stark verkleinert wird. Eine noch präzisere Estimation lässt sich erreichen, wenn die Signale nach den Summatoren 199 (Fig. 9) quantisiert und anschliessend einem Signalprozessor zur Weiterverarbeitung zugeführt werden.

Der beschriebene Empfänger ist gegen Frequenzoffset und Dopplerverschiebungen unempfindlich und ist lediglich auf eine saubere Symbolsynchronisation angewiesen, die aber für die Entspreizung ohnedies erforderlich und deswegen auch vorhanden ist. In einer noch einfacheren Ausführung besteht der DPSK-Demodulator nur aus einem realisierten Kanal (anstatt aus L Kanälen), wobei anstelle der Gewichtung der Pfade jeweils der beste der L Kanäle zur Demodulation ausgewählt wird. In diesem Fall spricht man von einem best-of oder Selection-Diversity Empfänger.

Besonders wichtig in einem SS-Empfänger ist die bereits mehrfach erwähnte Synchronisationsschaltung. In Fig. 12 ist der Betrag der Impulsantwort eines möglichen Kanals dargestellt, wobei Tc die Chipdauer, Tb die Datenbitdauer und M den Prozessgewinn bezeichnet. Die zeitliche Dauer m.Tc der Impulsantwort des Kanals beträgt nur Bruchteile der Datenbitdauer Tb. Für die Akquisition (Grobsynchronisation) wird beim erfindungsgemässen System ein Verfahren vorgeschlagen, das auf der Messung der Impulsantwort im Empfänger beruht. Da der Empfänger für Mehrwegauflösung konzipiert ist, besitzt er ein Empfangsfenster, innerhalb welchem mögliche Empfangssignale erfasst werden können. Hat der Empfänger beispielsweise N Empfangsarme, die nur je ein Codechip auseinanderliegen, dann ist die Empfangsfensterbreite Tw = (N-1).Tc.

Fig. 13 zeigt die Akquisition für N = 5. In Zeile a ist das Empfangsfenster Tw dargestellt, in Zeile b die Impulsantwort x(n) und in Zeile c die Energieverteilung y(k) innerhalb des Fensters als Funktion der Fensterposition. Die Impulsantwort wird dadurch ausgemessen, dass man den lokalen Codegenerator gegenüber dem Codegenerator des Senders gleiten lässt, wobei die Taktfrequenzen der beiden Codegeneratoren einen Versatz aufweisen (Continuous Sliding Correlator). Man kann aber auch den lokalen Codegenerator in diskreten zeitlichen Abständen Epsilon mal Tc über das Empfangssignal gleiten lassen (Discrete Sliding Correlator) und erhält dann nach dem Rückspreizen die Impulsantwort in diskreten zeitlichen Abständen Epsilon mal Tc. In Fig. 13 ist Epsilon gleich eins angenommen.

Während dieses Gleitprozesses wird nun immer die dazugehörende Energie berechnet, die in das Empfangsfenster Tw fällt. Lässt man den lokalen Codegenerator über eine ganze Codeperiode gleiten, dann wird man an irgendeiner Stelle ko das Energiemaximum detektieren können. Nach dem Gleitvorgang muss dann das Empfangsfenster Tw um ko zentriert werden (Zeile c), und anschliessend kann auf die Feinsynchronisation (Tracking) umgeschaltet werden, wobei eine Verifikationsstrategie zur Anwendung kommt, die bestätigen soll, ob man wirklich das Energiemaximum detektiert hat. Andernfalls kann eine neue Akquisition eingeleitet werden. Bei der Verifikation werden alle Energiewerte ausserhalb des Empfangsfensters Tw gemittelt, und dieser Geräuschwert wird mit der Energie im Empfangsfenster Tw des darauffolgenden Integrationsintervalls verglichen. Eine Mittelung über mehrere Integrationsintervalle erhöht die Robustheit der Verifikation gegen kurzzeitige Signalschwankungen. Es wird also im wesentlichen das Signal/Geräuschverhältnis überprüft. Diese Grobsynchronisation, die man mathematisch als eine Korrelation des Empfangsfensters Tw mit der Impulsantwort x(n) des Kanals bezeichnen kann, wird mittels des digitalen Signalprozessors DSP (Fig. 8) realisiert.

Das Tracking (Feinsynchronisation) besteht aus einem analogen Regelkreis, ähnlich dem klassischen Delay-Lock Loop (DLL), aber mit verbreiterter Diskriminatorkennlinie (S-Kurve). Da der Empfänger N Empfangspfade aufweist, können alle seine N Pfade für die Diskriminatorkennlinie berücksichtigt werden. Die S- Kurve ist also gleich breit wie ein Empfangsfenster Tw. Diese Breite kann durch An- und Abschalten einzelner Pfade verändert werden, wodurch die S-Kurve vorteilhaft der Impulsantwort des Kanals angepasst werden kann. Falls nur Sichtverbindung herrscht (keine Echos), ist eine schmale S-Kurve besser, da die äusseren Pfade einer breiten Kurve nur Rauschen in das System einbringen würden. Bei vielen Echos ist eine breite S- Kurve besser, da der Empfänger dann mehr Signalanteile zur Verfügung hat als mit einer schmalen Kurve.

Während des Trackings kann der Prozessor die Empfangspfade dauernd abtasten; dadurch ist immer bekannt, wie stark die Signale in den einzelnen Pfaden sind. Daraus kann der Prozessor die L Empfangspfade, die für Datendemodulation berücksichtigt werden, noch gewichten, je nachdem wie stark die einzelnen Echos einfallen. Ebenso kann der Prozessor ein Kriterium für Synchronisationsverlust festlegen, so dass eine neue Akquisition gestartet werden kann. Dies geschieht durch Messung der Signalenergie im Empfangsfenster, sowie durch Messung der Geräuschenergie am Rand oder ausserhalb des Empfangsfensters durch mindestens einen Empfangspfad mit entsprechend verschobenem Rückspreizcode, und nachfolgend dem Vergleich des resultierenden Signal-Geräuschverhältnisses mit einem Schwellwert. Eine andere Möglichkeit ist der Vergleich der Bitfehlerrate im Datendemodulator mit einem vorgegebenen Schwellwert. Die Kombination beider Verfahren ist vorteilhaft, weil sie zuverlässiger arbeitet als eine Methode alleine.

Damit das Rauschen besser unterdrückt werden kann, ist es notwendig, dass die Ausgänge der Detektoren zuerst über eine wählbare Zeit integriert und dann abgetastet werden. Falls das Signal-Geräuschverhältnis klein ist, können bei der Akquisition mehrere Impulsantworten aufgenommen und gefiltert werden, so dass ein eindeutiges Energiemaximum entsteht. Ein ähnlicher Effekt wird erzielt, falls man die Integrationszeit vergrössert.

Wie aus Fig. 12 ersichtlich ist, wird die Impulsantwort des Kanals nach wenigen Codechips abklingen. Die Dauer der Impulsantwort ist also, verglichen mit der Datenbitdauer, sehr klein. Dadurch kann auch eine andere Synchronisationsstrategie angewendet werden, die keinen Regelkreis für das Tracking benötigt.

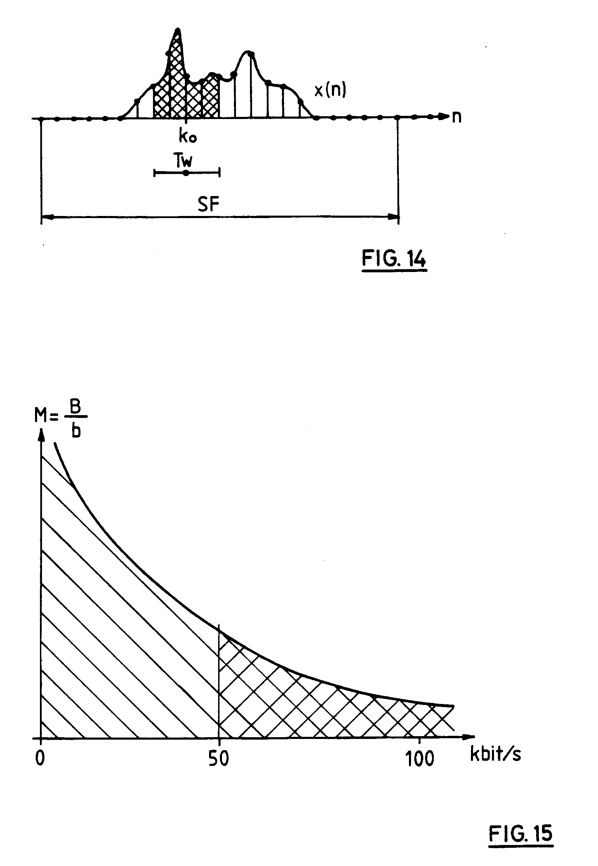

Bei dieser Strategie, die in Fig. 14 schematisch dargestellt ist, erfolgt die Akquisition nach dem erwähnten Discret Sliding Verfahren. Danach sind die Position ko und die zeitliche Dauer der Impulsantwort m.Tc bekannt. Nun benützt der Empfänger P von total N Empfangspfaden zur Positionierung des Empfangsfensters Tw. Der Signalprozessor kann dafür mit den restlichen R ( = N-P) Pfaden dauernd die Impulsantwort des Kanals im Hintergrund bezüglich der momentanen Demodulation absuchen (Scanning), ohne dass die Position des Empfangsfenster verändert wird. Die Suchfensterbreite SF muss grösser gewählt werden als die Dauer der Impulsantwort. Nach einem Suchlauf kann wieder ein neues Energiemaximum an der neuen Position ko detektiert werden. Ebenfalls ist die Dauer der neuen Impulsantwort wiederum bekannt; das Empfangsfenster mit den P Pfaden wird nun um das neue ko neu zentriert. Dies hat zur Folge, dass das Empfangsfenster immer optimal, dem Kanal zeitlich nachfolgend zentriert wird und dass dem Empfänger immer die maximal mögliche Empfangsenergie zur Verfügung steht.

Durch dieses Verfahren kann der analoge DLL-Kreis für die Feinsynchornisation weggelassen werden. Der Ausschnitt aus der Impulsantwort, der die meiste Energie liefert, wird also immer in das Empfangsfenster fallen. Die neue Suchfensterbreite wird der neuen Impulsantwort angepasst, und es können die Gewichtungskoeffizienten für die Demodulation neu angepasst werden. Danach beginnt ein neuer Suchlauf. Da das Suchfenster nur einige wenige Codechips umfasst, geschieht dieses Scanning so schnell, dass der Kanal in Echtzeit erfasst werden kann. Natürlich kann nach jedem Suchlauf noch eine Verifikation der Entscheidung erfolgen.

Das Signal/Geräuschverhältnis S/N des zurückgespreizten Signals innerhalb des Suchfensters SF kann mit jedem Suchlauf neu ermittelt werden, da das Suchfenster breiter gewählt wird als die Impulsantwort. Man bestimmt dazu das Rauschen, welches ausserhalb der Impulsantwort aber noch innerhalb des Suchfensters liegt, und das Signal aus der Impulsantwort.

Darauf lässt sich ein Synchronismusdetektor aufbauen, der auf der Kenntnis des aktuellen S/N-Verhältnisses beruht, und es lassen sich die Systemparameter (z.b; Integrationszeit beim Erfassen der Impulsantwort, Zeitkonstanten für die Regelmechanismen) anpassen, so dass ein adaptives System entsteht. Die Steuergrösse für die System-AGC wird direkt aus dem S/N-Verhältnis des zurückgespreizten Signals gewonnen und mit den Anforderungen der breitbandigen Empfängerstufen bezüglich Uebersteuerung optimiert. Die Suchfensterbreite wird der Impulsantwort angepasst, so dass minimale Suchzeiten resultieren.

Das Empfangsfenster mit den P Pfaden und der Gewichtungskoeffizient für den Datendemodulator werden dem aus dem Suchlauf resultierenden jeweiligen Energiemaximum mit einer Zeitkonstanten nachgeführt. Bei kleinem S/N-Verhältnis werden mehrere Impulsantworten aus mehreren Suchlaufen in einem Digitalfilter gemittelt, und das Empfangsfenster wird erst bei Detektion eines eindeutigen Energiemaximums ebenfalls mit einer Zeitkonstanten neu zentriert. Ein ähnlicher Effekt kann mit einer Erhöhung der Integrationszeit erzielt werden. Wenn der Synchronismus einen Synchronisationsverlust detektiert, wird eine einfache, bekannte Suchstrategie angewendet, indem man beispielsweise die Suchfensterbreite vergrössert und eine sogenannte Z-Suchstrategie einleitet.

Mit diesem adaptiven Scanning-Betrieb hat der Empfänger immer Kenntnis, welche Echos am stärksten einfallen. Da beim Codegenerator die Abgriffe mit beliebiger Verzögerung gewählt werden können, hat man die Möglichkeit, dem Datendemodulator die jeweils L stärksten Empfangspfade zuzuweisen.

Das Scanning führt zu einer rein digital signalverarbeitenden Lösung der Synchronisationsproblematik eines Direct-Sequence Spread Spectrum Systems, was im Hinblick für eine Hardware-Integration von Vorteil ist. Die Regelmechanismen unterliegen dank der präzisen Festlegung durch DSP-Algorithmen keinerlei Alterungsdrift, weisen keine Abgleichprobleme auf und sind exakt reproduzierbar. Ein flexibles Reagieren auf die Empfangsverhältnisse ist jederzeit sichergestellt.

Ein Vergleich des erfindungsgemässen Systems mit dem Stand der Technik zeigt folgende Vorteile des Systems und von dessen Anwendung:

Im US-Patent 4 672 658 ist beschrieben, wie die Mehrwegausbreitung (was einer Diversity entspricht) in einem PBX-System ausgenützt werden kann. Dabei wird der grösste Korrelationswert am Ausgang eines Matched Filters zur Datendemodulation herangezogen. Unter der Annahme, dass durch postalische Vorschriften ein Frequenzband von höchstens 20 MHz zur Verfügung steht und ein Prozessgewinn (Bandspreizungsfaktor) von 30 dB oder mehr (M grösser 1000) erreicht werden soll, ergibt sich eine maximale Datenrate von 10 kBit pro Sekunde, was für viele Anwendungen ausreicht.

Für eine Realisation mittels SAW-Technik ist aber die Convolverlänge aus Gründen der Grösse der Bauteile und der Verluste begrenzt. Mit dem heutigen Stand der Technik limitiert diese Grenze die maximale Datenbitdauer auf 20 Mikrosekunden, entsprechend einer Datenrate von 50 kBit. Diese SAW-Technik und die genannten Randbedingungen lassen einen maximalen Bandspreizungsfaktor (Prozessgewinn) von M = 256 zu.

Fig. 15 zeigt in einem Diagramm den Prozessgewinn M in Funktion der Datenrate in kBit/s. Der Prozessgewinn M ist definiert mit M = B/b, wobei b die Datenbandbreite und B die halbe Uebertragungsbandbreite bezeichnet. Die letztere ist konstant und durch postalische Vorschriften festgelegt. Das erfindungsgemässe System ist im gesamten schraffierten Bereich einsetzbar, die SAW-Technik nur im doppelt schraffierten Teilbereich. Aus Fig.

15 wird offenkundig, dass das erfindungsgemässe System mit dem beschriebenen Korrelationsempfänger den Vorteil aufweist, dass es im Bereich niedriger Datenraten einen hohen Prozessgewinn ermöglicht. Der Einsatz des erfindungsgemässen Empfängers ist lediglich durch die realisierbare Bandbreite der HF-Eingangsschaltungen und durch die Taktrate moderner Digitalschaltungen für die Spreizcode-Erzeugung limitiert. Für praktische Anwendungen werden hier postalische Vorschriften die Grenze setzen.

Dank der Möglichkeit der flexiblen Wahl des Systemparameter können bei der Auslegung des Systems folgende Kriterien berücksichtigt werden:

- Anpassung der Bandbreite und der Nutzung der Diversity an die Verhältnisse im Uebertragungskanal (Berücksichtigung der Mehrwegausbreitung);
- Wahl des Prozessgewinns je nach Anzahl der Benützer und der gewünschten Störunterdrückung;
- Wahl der Datenrate entsprechend dem Anwendungsgebiet des Systems.

Damit können Anwendungen der SS-Technik für digitale Sprachübertragung (2,4 k Bit/s bis 64 kBit/s) oder für Datenübertragung mit praktisch beliebiger Datenrate realisiert werden. Je nach Bedürfnis ist Simplex-, Semiduplex- und Vollduplex-Betrieb bei Cordless-Phone-Systemem, Datenübertragungseinrichtungen oder Telemetrie-Systemen mit Lokalnetzstruktur möglich. Derartige Systeme können auch als Ergänzung in einem Local Area Network (LAN) eingesetzt werden, wenn man zusätzlich mobile Teilnehmer hat.

In adaptiven Systemen ist durch Veränderung der Länge M der Spreizcodesequenz PN(t) eine sukzessive Anpassung des Prozessgewinns an die Störsituation einfach möglich. Aus der Information über die Anzahl momentaner Mehrwegpfade kann adaptiv die optimale Anzahl von Demodulatoren eingesetzt werden um die maximale Diversity bestmöglich auszunutzen, was einem "Maximum Ratio Combining" entspricht. Als Resultat erhält man in solchen Systemen in der Regel eine variable Datenrate.

Im Unterschied zu konventionellen Funkübertragungssystemen wird die Mehrwegausbreitung in Gebäuden oder im nicht ebenen Gelände konstruktiv optimal genutzt, und es ist ein gleichzeitiger Betrieb mit bestehenden konventionellen Funksystemen im selben Frequenzband zumindest beschränkt möglich.

**Patentansprüche**

1. Digitales Funkübertragungssystem für ein aus Zellen (MZ) aufgebautes Netz unter Verwendung der Bandspreiztechnik, bei welchem sen-

deseitig durch Multiplikation des nachrichten-tragenden Signals mit einer Hilfsfunktion eine Bandspreizung und empfangsseitig unter Benützung dieser Hilfsfunktion eine Rückspreizung erfolgt, mit mehreren innerhalb einer Zelle (MZ) vorhandenen Benützerstationen (MS) mit je einem Sender (S), einem Empfänger(E) für Mehrwegempfang und einer Steuereinheit (ST), und mit einer Basisstation (BS) mit einer Anzahl von Sende-Empfängern (SE) und einer Basissteuereinheit (STS), dadurch gekennzeichnet, dass

a) jeder Zelle (MZ) genau ein Set aus mehreren Sequenzsets für die als Hilfsfunktion verwendeten Spreizsequenzen zugeordnet und die Inverse der Spreizsequenz als Rückspreizsequenz verwendet ist;

b) Sequenzen aus verschiedenen Sets paarweise die Eigenschaft haben, dass die Absolutwerte der normierten periodischen Kreuzkorrelationsfunktionen für alle Werte viel kleiner sind als eins;

c) bei Sequenzen innerhalb eines Sets paarweise die Kreuzkorrelationsfunktion um den Nullpunkt optimal klein ist;

d) in der Basisstation (BS) für alle gleichzeitigen Verbindungen eine datensynchrone Aufbereitung der Sendesignale erfolgt; und

e) der Datentakt des Empfangssignals als Datentakt des Sendesignals der jeweiligen Benützerstation (MS) verwendet ist.

2. Funkübertragungssystem nach Anspruch 1, dadurch gekennzeichnet, dass die Basisstation (BS) einen Dienstkanal (DK) aufweist, welcher für den Verbindungsaufbau vorgesehen und mit derjenigen Sequenz aus dem Set der Spreizsequenzen betrieben ist, welche den für die Synchronisation günstigsten Verlauf der Autokorrelationsfunktion aufweist.

3. Funkübertragungssystem nach Anspruch 2, dadurch gekennzeichnet, dass als Spreizsequenzen optimierte Sequenzen aus der Familie der Goldcodes verwendet werden, welche zu vorzugsweise 20 Sets zu je 17 Sequenzen gruppiert sind.

4. Funkübertragungssystem nach Anspruch 3, dadurch gekennzeichnet, dass die Erzeugung der Codes in Codegeneratoren (7) mittels zweier rückgekoppelter Schieberegister (SR1, SR2) mit programmierbaren Rückkoppelungen erfolgt, wobei sich die einzelnen optimierten Codes bei fester Rückkoppelung nur in den programmierbaren Anfangswerten (a1, a2) der beiden Schieberegister unterscheiden.

5. Funkübertragungssystem nach Anspruch 4, dadurch gekennzeichnet, dass jeder Codegenerator (7) einen Synchronisationseingang (12) aufweist, über welchen die Erzeugung der Codes zeitlich steuerbar ist.

6. Funkübertragungssystem nach einem der Ansprüche 1 bis 5, dadurch gekennzeichnet, dass die Empfänger (E) der Basisstation (BS) und der Benützerstation (MS) als Korrelationsempfänger ausgebildet sind und einen HF-Empfangsteil (14), eine N-Kanal Rücktaststufe (15), einen N-Kanal Referenzcode-Generator (16), einen N-Kanal Enveloppen- oder Quadraturdetektor (17), eine Synchronisationsschaltung (18) und einen L-Kanal Demodulator (19) aufweisen.

7. Funkübertragungssystem nach Anspruch 6, dadurch gekennzeichnet, dass im HF-Eingangsteil (14) eine Umsetzung des Empfangssignals auf eine Zwischenfrequenz (ZF) erfolgt.

8. Funkübertragungssystem nach Anspruch 7, dadurch gekennzeichnet, dass die Rücktaststufe (15) für jeden Kanal (N) einen Mischer (151) zur Multiplikation des Zwischenfrequenzsignals (ZF) mit einem Referenzsignal und ein Bandpassfilter (152) mit vorzugsweise wählbarer Bandbreite aufweist, welche gemeinsam einen Korrelator bilden, in welchem eine Rückspreizung des Empfangssignals mit dem vom Referenzcode-Generator (16) erzeugten Empfangscode erfolgt.

9. Funkübertragungssystem nach Anspruch 8, dadurch gekennzeichnet, dass im Referenzcode Generator (16) eine der Anzahl (N) der Kanäle entsprechende Zahl von zeitlich gegeneinander verschobenen Versionen des gleichen Codes erzeugt wird, und dass diese Codes an die Mischer (151) der Rücktaststufe (15) geführt sind.

10. Funkübertragungssystem nach Anspruch 9, dadurch gekennzeichnet, dass die Verzögerungszeiten des Codes für die verschiedenen Kanäle einzeln programmierbar sind.

11. Funkübertragungssystem nach Anspruch 10, dadurch gekennzeichnet, dass die Ausgangssignale der Rücktaststufe (15) an die Demodulatoren (19) und an die Enveloppen- oder Quadraturdetektoren (17) geführt sind, mit welchen unabhängig von den empfangenen Daten die Signalstärke an den Ausgängen der Korrelatoren gemessen wird und daraus Regelsignale für Synchronisationsschaltung (18) gewonnen werden.

12. Funkübertragungssystem nach Anspruch 11, dadurch gekennzeichnet, dass in der Synchronisationsschaltung (18) eine Integration der N Enveloppendetektorsignale über eine einstellbare Zeit erfolgt, und dass die so integrierten Signale analog-digital gewandelt und einem digitalen Prozessor (DSP) zugeführt werden, welcher seinerseits die genannte Integration steuert und Regelsignale für die Steuerung des Referenzcode-Generators (16) berechnet.

13. Funkübertragungssystem nach Anspruch 12, dadurch gekennzeichnet, dass als Primärmodulation DPSK ( = Differential Phase Shift Keying) gewählt und der Demodulator (19) entsprechend in DPSK-Technik realisiert ist, und dass zur Ermöglichung einer gegen Frequenzoffset und Dopplerverschiebung unempfindlichen Datenrückgewinnung in jedem der L Empfangskanäle die Korrelatorsignale (CH1 bis CHL) auf Abschwächer (191) und anschliessend auf eine Stufe (DD) zur differentiellen Demodulation geführt sind.

14. Funkübertragungssystem nach Anspruch 13, dadurch gekennzeichnet, dass die Stufe (DD) zur differentiellen Demodulation eine CCD-Verzögerungsleitung (193) zur Verzögerung des Eingangssignals um eine Datenbitdauer Tb, einen 90° Phasenschieber (194) zur Erzeugung einer 90° phasenverschobenen Version des Eingangssignals und zwei Mischer (195) enthält, welche das Eingangssignal respektive das phasenverschobene Eingangssignal mit dem verzögerten Eingangssignal multiplizieren, und dass die resultierenden Ausgangssignale (xI, xQ) je einer Integrationsstufe (197) zugeführt werden, wo sie über eine Datenbitdauer Tb integriert werden.

15. Funkübertragungssystem nach Anspruch 14, dadurch gekennzeichnet, dass die Signale der beiden Kanäle I, Q aller L Empfangskanäle aufsummiert und in ein rechtwinkeliges Koordinatensystem eingetragen werden, wobei durch eine Entscheidungslogik (EL) der Datenwert des jeweils übertragenen Informationsbits bestimmt wird.

16. Funkübertragungssystem nach Anspruch 15, dadurch gekennzeichnet, dass die I/Q-Ebene für das Signalpaar (I, Q) in acht Sektoren unterteilt ist, und dass am Eingang der Entscheidungslogik (EL) Komparatoren (K) vorgesehen sind, durch welche festgestellt wird, welchem der genannten Sektoren das eintreffende Signalpaar angehört.

17. Funkübertragungssystem nach Anspruch 16, dadurch gekennzeichnet, dass in der Synchronisationsschaltung (18) die Grobsynchronisation durch Ausmessung der Impulsantwort (x-(n)) im Empfänger (E) erfolgt.

18. Funkübertragungssystem nach Anspruch 17, dadurch gekennzeichnet, dass der lokale Codegenerator (16) über denjenigen des Sender gleiten gelassen und die in das Empfangsfenster (Tw) des Empfängers fallende Energie berechnet und das Energiemaximum detektiert wird, und dass das Empfangsfenster um die Stelle (ko) des Energiemaximums zentriert wird.

19. Funkübertragungssystem nach Anspruch 18, dadurch gekennzeichnet, dass zur Zentrierung des Empfangsfensters (Tw) nur ein Teil der Anzahl (N) der Empfangspfade des Empfängers verwendet wird, und dass zur Feinsynchronisation mit den restlichen Pfaden dauernd über ein Suchfenster (SF), dessen Breite grösser ist als die Dauer der Impulsantwort (x(n)), die Impulsantwort des Kanals im Hintergrund abgesucht und eine eventuell andere Stelle des Energiemaximums für eine neuerliche Zentrierung des Empfangsfensters als Mittel zur Feinsynchronisation gesucht wird.

20. Funkübertragungssystem nach Anspruch 18, dadurch gekennzeichnet, dass nach jeder Grobsynchronisation eine auf dem Signal/Geräusch-Verhältnis basierte Verifikation durchgeführt und gegebenenfalls eine neue Grobsynchronisation eingeleitet wird.

21. Funkübertragungssystem nach Anspruch 19, dadurch gekennzeichnet, dass durch eine auf dem Signal/Geräusch-Verhältnis basierte Messung zusammen mit der Fehlerrate des Demodulators ein Kriterium für den Verlust der Synchronität bestimmt wird, wobei das Signal im Empfangsfenster (Tw) und das Geräusch im Suchfenster (SF) bestimmt wird.

**Claims**

1. Digital radio transmission system for a network of cells (MZ) using a phase-coded spread spectrum technique, in which spectrum spreading of a transmitted information carrying signal takes place by multiplication of the information carrying signal with an auxiliary function and despreading of a received information carrying signal takes place by using this auxiliary function, comprising several user Stations (MS) within a cell (MZ), each having a transmitter (S), a receiver (E) for multipath reception and a control unit (ST), and further comprising a base station (BS) with a plurality of transmitter receivers (SE) and a base control unit (STS), characterized in that

a) exactly one set of several sequence sets for the spreading sequences used as auxiliary function is allocated to each cell (MZ), and an inverse of the one spreading sequence set is used as the despreading sequence;

b) paired sequences of different sets have the property that absolute values for normalized periodic cross-correlation functions are much less than one for all values;

c) in sequences within a set, in pairs, the cross-correlation function around the zero point is optimally small;

d) a data synchronous generation of the transmitted information carrying signals takes place in the base station (BS) for all simultaneous connections; and

e) the data clock of the received information carrying signal is used as a data clock of the transmitted information carrying signal within the given user station (MS).

2. Radio transmission system according to Claim 1, characterized in that the base station (BS) has a service channel (DK) which is provided for establishment of connections and is operated with a sequence selected from the set of spreading sequences, the sequence selected having an auto-correlation function which facilitates synchronization.

3. Radio transmission system according to Claim 2, characterized in that optimized sequences from the family of gold codes are used as spreading sequences, and are grouped preferably into 20 sets of 17 sequences each.

4. Radio transmission system according to Claim 3, characterized in that the generation of the codes in code generators (7) takes place by means of two linear feedback shift registers (SR1, SR2) with programmable feedback taps, the individual optimized codes on fixed feedback differing only in the programmable initial values (a1, a2) of the two shift registers.

5. Radio transmission system according to Claim 4, characterized in that each code generator (7) has a synchronization input (12) by means of which the generation of the codes can be controlled with respect to time.

6. Radio transmission signal according to one of Claims 1 to 5, characterized in that the receivers (E) of the base station (BS) and of the user station (MS) are designed as correlation receivers and have an HF reception part (14), a N-channel despreader (15), a N-channel reference code generator (16), a N-channel envelope or square law detector (17), a synchronization circuit (18) and a L-channel demodulator (19).

7. Radio transmission system according to Claim 6, characterized in that conversion of the received signal to an intermediate frequency signal (ZF) takes place in the HF reception part.

8. Radio transmission system according to Claim 7, characterized in that the despreader (15) for each channel (N) has a mixer (151) for multiplication of the intermediate frequency signal (ZF) with a reference signal and a band-pass filter (152) with preferably selectable bandwidth, which jointly form a correlator in which a despreading of the reception signal with the reception code produced by the reference code generator (16) takes place.

9. Radio transmission system according to Claim 8, characterized in that in the reference code generator (16) there is produced a number corresponding to the number (N) of the channels of the versions shifted from one another in time of the same code, and in that these codes are transmitted to the mixers (151) of the despreader (15).

10. Radio transmission system according to Claim 9, characterized in that the delay times of the code for the various channels are individually programmable.

11. Radio transmission system according to Claim 10, characterized in that the output signals of the despreader (15) are transmitted to the demodulators (19) and to the envelope or square law detectors (17) with which the signal intensity at the outputs of the correlators is measured independently of the received data, and control signals for the synchronization circuit (18) are obtained from these measurements.

12. Radio transmission system according to Claim 11, characterized in that an integration of the N envelope detector signals over an adjustable time takes place in the synchronization circuit (18), and in that the signals which have been thus integrated undergo analog-digital conversion and are transmitted to a digital processor (DSP) which, for its part, controls the said integration and calculates control signals for controlling the reference code generator (16).

13. Radio transmission system according to Claim 12, characterized in that DPSK (= Differential Phase Shift Keying) is chosen as a primary modulation and the demodulator (19) is operated using DPSK, and in that for obtaining data recovery which is insensitive to frequency offset and Doppler shift, the correlator signals (CH1 to CHL) in each of the L channels are transmitted to attenuators (191) and subsequently to a stage (DD) for differential demodulation.

14. Radio transmission system according to Claim 13, characterized in that the stage (DD) for differential demodulation includes a CCD delay line (193) which delays the input signal by one bit duration Tb, a 90° phase shifted version of the input signal, and two mixers (195) which multiply the input signal and the phase shifted input signal, respectively, with the delayed input signal, and in that the resulting output signals (xI, xQ) are transmitted to one integration stage (197) respectively, where they are integrated over one bit duration Tb.

15. Radio transmission system according to Claim 14, characterized in that the signals of the two channels I, Q of all L reception channels are added and entered into a rectangular coordinate system, and a data value of each transmitted information bit is determined by a decision logic (EL).

16. Radio transmission system according to Claim 15, characterized in that the I/Q plane for the pair of signals (I, Q) is subdivided into eight sectors, and in that comparators (K) are provided at the input of the decision logic (EL), which comparators determine to which of the said sectors the incoming signal pair belongs.

17. Radio transmission system according to Claim 16, characterized in that in the synchronization circuit (18) coarse synchronization takes place by measurement of an impulse response (x(n)) in the receiver (E).

18. Radio transmission system according to Claim 17, characterized in that the local code generator (16) slides over the code generator of the transmitter, and the energy falling into the reception window (Tw) of the receiver is calculated and the energy maximum is detected, and in that the reception window is centred around the point (ko) of the energy maximum.

19. Radio transmission system according to Claim 18, characterized in that only a portion of the number (N) of the reception paths of the receiver is used for centring the reception window (Tw), and in that for fine synchronization the remaining paths are used for continuously scanning the background impulse response of the channel by means of a scanning window (SF) which is wider than the duration of the impulse response, and possibly another position of the energy maximum is sought for a new centring of the reception window as a means for synchronization.

20. Radio transmission system according to Claim 18, characterized in that after each coarse synchronization, a verification based on the signal/noise ratio is carried out and, optionally, a new coarse synchronization is introduced.

21. Radio transmission system according to Claim 19, characterized in that a criterion for the loss of synchronism is determined by a measurement based on the signal/noise ratio together with the error rate of the demodulator, the signal in the reception window (Tw) and the noise in the scanning window (SF) being determined.

**Revendications**

1. Système de transmission radio, numérique, pour un réseau cellulaire (MZ) utilisant la technique de l'étalement de bande selon lequel du côté de l'émission, par multiplication du signal portant les informations avec une fonction auxiliaire on réalise un étalement de bande et du côté de la réception, en utilisant cette fonction auxiliaire on effectue un étalement en retour, avec plusieurs postes d'utilisateurs (MS) existant dans une cellule (MZ) avec chaque fois un émetteur (S), un récepteur (E) pour la réception par chemins multiples et une unité de commande (ST) ainsi qu'un poste de base (BS) avec un certain nombre d'émetteurs-récepteurs (SE) et une unité de commande de base (STS), système caractérisé en ce que

a) à chaque cellule (MZ) est associé de manière précise un jeu formé de plusieurs jeux de séquences pour les séquences d'étalement utilisées comme fonctions auxiliaires et l'inverse de la séquence d'étalement est utilisé comme séquence d'étalement en retour ;

b) les séquences des différents jeux ont par paire la propriété que les valeurs absolues des fonctions de corrélation croisées, périodiques, normées, sont inférieures à l'unité pour toutes les valeurs ;

c) pour les séquences à l'intérieur d'un jeu, par paire, la fonction de corrélation croisée est optimalement faible autour du points zéro ;

d) dans le poste de base (BS), pour toutes les liaisons simultanées il y a un traitement synchrone des données des signaux d'émetteurs et

e) l'horloge de données du signal de réception est utilisée comme horloge de données du signal d'émission du poste utilisateur respectif (MS).

2. Système de transmission radio selon la revendication 1, caractérisé en ce que le poste de base (BS) comporte un canal de service (DK) prévu pour établir la liaison et qui fonctionne avec la séquence du jeu des séquences d'étalement qui donne pour la fonction d'auto-corrélation, le profil le plus avantageux pour la synchronisation.

3. Système de transmission radio selon la revendication 2, caractérisé en ce que comme séquence d'étalement on utilise des séquences optimisées de la famille du code Gold qui regroupent de préférence 20 jeux avec chaque fois 17 séquences.

4. Système de transmission radio selon la revendication 3, caractérisé en ce que l'obtention du code dans le générateur de code (7) se fait avec deux registres à décalage à réaction (SR1, SR2) et des réactions programmables, le code optimum, séparément, pour une réaction fixe ne se distinguant que dans les valeurs initiales programmables (a1, a2) des deux registres à décalage.

5. Système de transmission radio selon la revendication 4, caractérisé en ce que chaque générateur de code (7) comporte une entrée de synchronisation (12) qui permet de commander dans le temps la génération du code.

6. Système de transmission radio selon l'une des revendications 1 à 5, caractérisé en ce que les récepteurs (E) du poste de base (BS) et du poste d'utilisateur (MS) sont conçus comme des récepteurs de corrélation et possèdent une partie de réception HF (14), un étage de détection en retour de canal N (15), un générateur de code de référence de canal de retour N, (16), un détecteur d'enveloppe et de quadrature de canal N, (17), un circuit de synchronisation (18) et un démodulateur de L canal (19).

7. Système de transmission radio selon la revendication 6, caractérisé en ce que la partie de réception HF (14) effectue une conversion du signal reçu en un signal de fréquence intermédiaire (FI).

8. Système de transmission radio selon la revendication 7, caractérisé en ce que l'étage de détection en retour (15) comporte pour chaque canal (N) un mélangeur (151) pour multiplier le signal de fréquence intermédiaire (FI) à un signal de référence et à un filtre passe-bande (152) de largeur de bande de préférence choisie, qui forment en commun un corrélateur assurant l'étalement en retour du signal de réception avec le code de réception généré par le générateur de code de référence (16).

9. Système de transmission radio selon la revendication 8, caractérisé en ce que dans le générateur de code de référence (16) on génère un nombre de versions du même code, décalées, les unes par rapport aux autres, le nombre correspondant au nombre (N) des canaux, avec des versions décalées dans le temps du même code.

10. Système de transmission radio selon la revendication 9, caractérisé en ce que les retards du code sont programmables séparément pour les différents canaux.

11. Système de transmission radio selon la revendication 10, caractérisé en ce que les signaux de sortie de l'étage de détection en retour (15) sont conduits au démodulateur (19) et au détecteur d'enveloppe et de quadrature (17) qui, indépendamment des données reçues, mesurent l'amplitude du signal sur la sortie des corrélateurs et on en déduit des signaux de régulation pour le circuit de synchronisation (18).

12. Système de transmission radio selon la revendication 11, caractérisé en ce que dans le circuit de synchronisation (18) on fait une intégration des N signaux de détecteur d'enveloppe sur une durée réglable et les signaux ainsi intégrés sont soumis à une conversion analogique/numérique pour être appliqués à un processeur numérique (DSP) qui commande à son tour l'intégration et calcule des signaux de régulation pour la commande du générateur de code de référence (16).

**13.** Système de transmission radio selon la revendication 12, caractérisé en ce que comme modulation primaire on choisit le mode DPSK ( = Differential Phase Shift Keying) et on réalise le démodulateur (19) de façon correspondante en technique DPSK et pour permettre une récupération des données insensibles à la dérive de fréquence et au décalage Doppler, on transmet les signaux de corrélation (CH1...CHL) à chacun des L canaux de réception sur un atténuateur (191) puis à un étage (DD) pour leur démodulation différentielle.

**14.** Système de transmission radio selon la revendication 13, caractérisé en ce que l'étage (DD) de démodulation différentielle est une ligne de retard de type CCD, (193) pour retarder le signal d'entrée d'une durée de bit de données Tb, d'un déphaseur à 90° (194) pour générer une version déphasée à 90° du signal d'entrée et deux mélangeurs (195) qui multiplient le signal d'entrée, respectivement le signal d'entrée déphasé, avec le signal d'entrée retardé et en ce que les signaux de sortie, résultants, (xI, xQ) sont appliqués à un étage d'intégration (197) qui intègre les signaux sur une durée de bit de données Tb.

**15.** Système de transmission radio selon la revendication 14, caractérisé en ce qu'on additionne les signaux des deux canaux I, Q de tous les canaux de réception et on les enregistre dans un système de coordonnées rectangulaires, une logique de décision (EL) déterminant la valeur des données de chaque bit d'informations transmis.

**16.** Système de transmission radio selon la revendication 15, caractérisé en ce qu'on subdivise le plan I/Q pour les paires de signaux (I, Q) en huit secteurs et en ce qu'à l'entrée de la logique de décision (EL) il y des comparateurs (K) qui permettent de connaître le secteur auquel appartient la paire de signaux concernée.

**17.** Système de transmission radio selon la revendication 16, caractérisé en ce que le circuit de synchronisation (18) assure la synchronisation grossière par dimensionnement de la réponse impulsionnelle (x(n)) dans le récepteur (E).

**18.** Système de transmission radio selon la revendication 17, caractérisé en ce que le générateur local de code (16) glisse par-dessus celui de l'émetteur et calcule l'énergie arrivant dans la fenêtre de réception (Tw) du récepteur et détecte l'énergie maximale et en ce que la fenêtre de réception est centrée autour du point (k0) du maximum de l'énergie.

**19.** Système de transmission radio selon la revendication 18, caractérisé en ce que pour centrer la fenêtre de réception (Tw) on n'utilise qu'une partie du nombre (N) de chemins de réception du récepteur et pour la synchronisation fine avec le chemin restant on recherche en permanence, à l'aide de la fenêtre de recherche (SF), la largeur supérieure à la durée de la réponse impulsionnelle (x(n)), la réponse impulsionnelle du canal dans l'arrière plan et un éventuel autre emplacement de l'énergie maximale pour un nouveau centrage de la fenêtre de réception comme moyen de synchronisation fine.

**20.** Système de transmission radio selon la revendication 18, caractérisé en ce qu'après chaque synchronisation grossière on exécute une vérification basée sur le support signal/bruit et on commence le cas échéant une nouvelle synchronisation grossière.

**21.** Système de transmission radio selon la revendication 19, caractérisé en ce que par une mesure reposant sur le rapport signal/bruit et de coefficient d'erreur du démodulateur on définit un critère de la perte de synchronisme, le signal dans la fenêtre de réception (Tw) et le bruit dans la fenêtre de recherche (SF) étant déterminés.

FIG. 1

SENDER          EMPFÄNGER

FIG. 2

FIG. 3

$h1 = (h_{1,0}, h_{1,1}, \ldots, h_{1,10})$

$h2 = (h_{2,0}, h_{2,1}, \ldots, h_{2,10})$

$a1 = (a_{1,0}, a_{1,1}, \ldots, a_{1,9})$

$a2 = (a_{2,0}, a_{2,1}, \ldots, a_{2,9})$

FIG. 5

21

FIG. 4

| MZ1 | | MZ2 | | MZ3 | | MZ4 | | MZ5 | | MZ6 | | MZ7 | | MZ8 | | MZ9 | | MZ10 | |
|---|---|---|---|---|---|---|---|---|---|---|---|---|---|---|---|---|---|---|---|
| $a1$ | $a2$ | $a1$ | $a2$ | $a1$ | $a2$ | $a1$ | $a2$ | $a1$ | $a2$ | $a1$ | $a2$ | $a1$ | $a2$ | $a1$ | $a2$ | $a1$ | $a2$ | $a1$ | $a2$ |
| 0700 | 0000 | 0000 | 1060 | 1127 | 0645 | 1604 | 0156 | 1653 | 1732 | 1303 | 1435 | 0011 | 0064 | 1053 | 0602 | 1322 | 0540 | 1473 | 1443 |
| 1454 | 0643 | 1043 | 0346 | 1363 | 1177 | 0216 | 1354 | 0442 | 1606 | 1720 | 1504 | 1646 | 0117 | 1557 | 1221 | 1075 | 1146 | 1021 | 0355 |
| 1075 | 1216 | 1614 | 1027 | 0746 | 0751 | 1157 | 1417 | 0742 | 0766 | 1554 | 0256 | 0551 | 1324 | 1605 | 1041 | 0642 | 1477 | 1514 | 1545 |
| 0556 | 1571 | 0740 | 0037 | 0076 | 1577 | 1355 | 1541 | 1136 | 0504 | 1367 | 1425 | 0750 | 0532 | 0202 | 1300 | 1246 | 1370 | 1363 | 1444 |
| 1324 | 1145 | 0315 | 0215 | 1677 | 1554 | 0266 | 1472 | 1405 | 1472 | 0475 | 0246 | 0532 | 0250 | 0142 | 1106 | 1303 | 0244 | 1622 | 1350 |
| 1136 | 0774 | 1252 | 0242 | 0550 | 1114 | 0740 | 1270 | 0636 | 0705 | 1707 | 1070 | 1202 | 1304 | 1535 | 0713 | 0704 | 0714 | 1407 | 0176 |
| 1407 | 1564 | 0073 | 0723 | 1104 | 0765 | 0715 | 0637 | 1164 | 1425 | 1557 | 0603 | 1050 | 1056 | 1272 | 1146 | 0420 | 1677 | 1236 | 1360 |
| 0761 | 0714 | 1350 | 0562 | 0765 | 0076 | 1275 | 1067 | 1744 | 0565 | 0051 | 0167 | 0352 | 1772 | 0633 | 0345 | 0674 | 0667 | 0732 | 1221 |
| 1077 | 0115 | 0751 | 0324 | 0642 | 1277 | 0575 | 0736 | 0672 | 0703 | 1651 | 1532 | 0536 | 0064 | 0451 | 0714 | 1244 | 0250 | 1727 | 0556 |
| 0040 | 0207 | 0345 | 0205 | 0260 | 1640 | 0103 | 0242 | 1714 | 1327 | 1360 | 1202 | 0475 | 0072 | 0742 | 0517 | 0001 | 1407 | 0730 | 0562 |
| 0236 | 1700 | 0171 | 1436 | 0041 | 1431 | 1204 | 1420 | 1527 | 1151 | 0654 | 1674 | 0013 | 0336 | 0342 | 0030 | 1126 | 0231 | 1436 | 1674 |
| 0703 | 1164 | 0200 | 1243 | 0726 | 0177 | 0030 | 0114 | 1104 | 1777 | 1126 | 0576 | 0075 | 0655 | 1227 | 0432 | 0523 | 0350 | 0276 | 1657 |
| 0030 | 0764 | 1245 | 1030 | 1524 | 1263 | 1452 | 1632 | 0113 | 1606 | 0717 | 1060 | 1132 | 1744 | 1724 | 0747 | 1124 | 1452 | 0261 | 1162 |
| 0241 | 0256 | 0744 | 0733 | 1033 | 1530 | 1643 | 1216 | 0335 | 0455 | 1415 | 0163 | 1450 | 0205 | 0212 | 0640 | 1066 | 1175 | 0053 | 1255 |
| 1555 | 1002 | 0765 | 0416 | 0054 | 1662 | 1561 | 0211 | 1545 | 0671 | 1700 | 0764 | 0760 | 0564 | 1705 | 1164 | 1445 | 1610 | 1240 | 1621 |
| 1304 | 0367 | 1531 | 1257 | 1104 | 0155 | 1027 | 1370 | 0157 | 0051 | 0406 | 1442 | 1137 | 0124 | 0114 | 1764 | 1712 | 0640 | 0732 | 1755 |
| 0256 | 0166 | 0133 | 0374 | 0720 | 0623 | 1122 | 1746 | 0442 | 0466 | 1771 | 0772 | 0402 | 0307 | 1471 | 0570 | 0454 | 1631 | 1355 | 1504 |

**FIG. 6a**

EP 0 361 299 B1

| MZ11 | | MZ12 | | MZ13 | | MZ14 | | MZ15 | | MZ16 | | MZ17 | | MZ18 | | MZ19 | | MZ20 | |
|------|------|------|------|------|------|------|------|------|------|------|------|------|------|------|------|------|------|------|------|
| a1 | a2 | a1 | a2 | a1 | a2 | a1 | a2 | a1 | a2 | a1 | a2 | a1 | a2 | a1 | a2 | a1 | a2 | a1 | a2 |
| 1736 | 0234 | 1623 | 1711 | 0476 | 0257 | 1147 | 1213 | 0756 | 0077 | 1632 | 1703 | 0661 | 1376 | 0545 | 0451 | 1675 | 0764 | 0145 | 1743 |
| 0037 | 1434 | 0656 | 1244 | 0436 | 1705 | 0052 | 1705 | 1177 | 1740 | 0137 | 1771 | 0551 | 1215 | 1774 | 0247 | 1024 | 1105 | 1142 | 0372 |
| 0342 | 1112 | 0222 | 1453 | 0115 | 1223 | 1352 | 0552 | 1505 | 1373 | 0526 | 1110 | 0333 | 1275 | 1661 | 1156 | 1273 | 0740 | 0030 | 0503 |
| 1531 | 1102 | 1742 | 1046 | 0276 | 0605 | 1772 | 1120 | 1546 | 0644 | 0725 | 0315 | 0323 | 1443 | 1146 | 0716 | 1302 | 0311 | 1331 | 0734 |
| 0520 | 1163 | 0455 | 0076 | 1310 | 0673 | 1072 | 1023 | 0347 | 1203 | 0561 | 1301 | 1264 | 1700 | 0662 | 0573 | 0543 | 1340 | 1533 | 1230 |
| 0274 | 0352 | 0747 | 0351 | 1267 | 1562 | 0545 | 0112 | 0256 | 0662 | 1475 | 1613 | 1203 | 1402 | 0730 | 0431 | 1013 | 1224 | 0300 | 0323 |
| 1410 | 0060 | 1352 | 0033 | 0173 | 0061 | 0542 | 1655 | 0116 | 1561 | 1225 | 0147 | 1271 | 1074 | 0553 | 1242 | 0373 | 1335 | 0044 | 1257 |
| 0054 | 1041 | 0420 | 0607 | 0725 | 1173 | 1175 | 1311 | 1355 | 1023 | 1042 | 0262 | 1446 | 0451 | 0142 | 1103 | 1156 | 1362 | 0452 | 0513 |
| 0357 | 1226 | 0754 | 0630 | 1027 | 1124 | 1505 | 1323 | 0412 | 1566 | 0664 | 1655 | 0376 | 0536 | 0554 | 0021 | 1325 | 0743 | 0606 | 1032 |
| 0321 | 0676 | 0764 | 1313 | 1522 | 0417 | 1472 | 0636 | 1424 | 0542 | 0702 | 1030 | 1617 | 1236 | 1436 | 0605 | 0232 | 1365 | 0470 | 0356 |
| 0713 | 0127 | 0220 | 0157 | 0047 | 1437 | 1271 | 1764 | 1122 | 0523 | 1231 | 0463 | 0414 | 0060 | 1455 | 0601 | 1633 | 0230 | 0730 | 1121 |
| 0667 | 0163 | 0356 | 0337 | 0063 | 0424 | 0467 | 0076 | 1664 | 1677 | 0514 | 0066 | 1243 | 0344 | 1443 | 0121 | 1563 | 0543 | 0237 | 0034 |
| 0705 | 0105 | 0176 | 1352 | 0114 | 0672 | 1220 | 1455 | 1765 | 1654 | 1174 | 1337 | 0317 | 0662 | 1756 | 0334 | 0303 | 0606 | 1023 | 0467 |
| 1324 | 0740 | 1760 | 0466 | 1442 | 0665 | 0317 | 1412 | 0116 | 1152 | 1301 | 1435 | 1210 | 0072 | 1017 | 0160 | 1714 | 0001 | 1547 | 1367 |
| 0672 | 1341 | 1060 | 1271 | 1471 | 1147 | 1116 | 1210 | 0724 | 0524 | 0033 | 0656 | 0214 | 1117 | 1154 | 0172 | 0242 | 1270 | 0010 | 1031 |
| 1626 | 1523 | 0453 | 1163 | 1070 | 0276 | 1273 | 0731 | 0571 | 1447 | 0770 | 0706 | 1010 | 0211 | 0550 | 0276 | 0312 | 1403 | 0660 | 0675 |
| 1177 | 0053 | 1315 | 1745 | 1716 | 0361 | 0745 | 0241 | 0515 | 1163 | 0327 | 1464 | 0356 | 1526 | 1310 | 1705 | 0575 | 0051 | 0254 | 0416 |

EP 0 361 299 B1

**FIG. 6b**

FIG. 7

FIG. 8

EP 0 361 299 B1

FIG. 9

FIG. 10

FIG.11a

FIG.11b

FIG. 12

FIG. 13

FIG. 14

$x(n)$

$k_o$

Tw

SF

$M = \dfrac{B}{b}$

0      50      100    kbit/s

FIG. 15